(19) Europäisches Patentamt
European Patent Office
Office européen des brevets

(11) EP 1 208 173 B1

(12) EUROPÄISCHE PATENTSCHRIFT

(45) Veröffentlichungstag und Bekanntmachung des Hinweises auf die Patenterteilung:
**16.03.2005 Patentblatt 2005/11**

(21) Anmeldenummer: **00960466.1**

(22) Anmeldetag: **16.08.2000**

(51) Int Cl.[7]: **C09D 151/08**, C09D 183/10, C09D 143/04

(86) Internationale Anmeldenummer:
**PCT/EP2000/007990**

(87) Internationale Veröffentlichungsnummer:
**WO 2001/012736 (22.02.2001 Gazette 2001/08)**

(54) **BESCHICHTUNGSSTOFF UND SEINE VERWENDUNG ZUR HERSTELLUNG HOCHKRATZFESTER MEHRSCHICHTIGER KLARLACKIERUNGEN**

COATING MATERIAL AND ITS USE FOR PRODUCING HIGHLY SCRATCH RESISTANT MULTILAYER TRANSPARENT LACQUERS

MATIERE DE RECOUVREMENT ET SON UTILISATION POUR REALISER DES MISES EN VERNIS CLAIR HAUTEMENT RESISTANTES A L'ABRASION

(84) Benannte Vertragsstaaten:
**AT BE CH CY DE DK ES FI FR GB GR IE IT LI LU MC NL PT SE**

(30) Priorität: **16.08.1999 DE 19938759**

(43) Veröffentlichungstag der Anmeldung:
**29.05.2002 Patentblatt 2002/22**

(73) Patentinhaber:
- **BASF Coatings AG**
  **48165 Münster (DE)**
- **Goldschmidt AG**
  **45127 Essen (DE)**

(72) Erfinder:
- **RÖCKRATH, Ulrike**
  **48308 Senden (DE)**
- **BAUMGART, Hubert**
  **48163 Münster (DE)**
- **ZUMBRINK, Andrea**
  **48734 Reken (DE)**
- **SILBER, Stefan**
  **47807 Krefeld (DE)**
- **FARWICK, Thomas**
  **48727 Billerbeck (DE)**

(74) Vertreter: **Fitzner, Uwe, Dr. et al**
**Lintorfer Strasse 10**
**40878 Ratingen (DE)**

(56) Entgegenhaltungen:
**EP-A- 0 284 679**
**WO-A-00/26309**
**WO-A-00/50178**
**WO-A-96/38490**
**US-A- 4 766 185**
**US-A- 4 873 298**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 208 173 B1

## Beschreibung

Die vorliegende Erfindung betrifft einen neuen thermisch sowie gegebenenfalls mit aktinischer Strahlung härtbaren Beschichtungsstoff sowie eine hiermit hergestellte neue hochkratzfeste mehrschichtige Klarlackierung. Außerdem betrifft die vorliegende Erfindung die Verwendung der neuen hochkratzfesten mehrschichtigen Klarlackierung in der Automobilerst- und -reparaturlackierung, der industriellen Lackierung, inclusive Coil Coating und Container Coating, der Kunststofflackierung und der Möbellackierung. Des weiteren betrifft die vorliegende Erfindung ein neues Verfahren zur Herstellung von mehrschichtigen Klarlackierungen und farb- und/oder effektgebenden Mehrschichtlackierungen.

Automobilkarosserien, Kunststoffteile für Automobile oder Haushaltsgeräte und industrielle Bauteile werden heutzutage durch eine Klarlackierung geschützt. Hierbei kann die Klarlackierung als alleinige Lackschicht verwendet werden oder die oberste Schicht einer farb- und/oder effektgebenden Mehrschichtlackierung bilden. Insbesondere Automobilkarosserien sind größtenteils mit einer solchen farb- und/oder effektgebenden Mehrschichtlackierung versehen.

Die Anforderungen an die Beständigkeit von Lackierungen, welche der Witterung, insbesondere der Sonneneinstrahlung und dem sauren Regen, ausgesetzt sind und zudem auch noch häufiger mechanischer Beanspruchung, insbesondere durch Waschbürstenreinigungsanlagen, werden stetig höher. Dies gilt ganz besonders für die Fahrzeuglackierungen, welche diese Anforderungen erfüllen und zusätzlich noch höchste optische Ansprüche an Glanz, Oberflächenglätte und Farbe befriedigen müssen.

Bisher wurde dieses Problem dadurch gelöst, daß entsprechend den gestiegenen Anforderungen an die Umweltverträglichkeit eine insbesondere aus wäßrigen Beschichtungsstoffen aufgebaute Mehrschichtlackierung auf die Substrate appliziert wird. Im Falle von Metallsubstraten wird diese bekanntermaßen aus einem wäßrigen Elektrotauchlack, einem Wasserfüller, einem Basislack, insbesondere einem Wasserbasislack, und einem lösemittelhaltigen Klarlack hergestellt. Der Elektrotauchlack und der Wasserfüller werden jeweils nach ihrer Applikation eingebrannt und bilden dann die Grundierung. Hierauf wird der Basislack, insbesondere der Wasserbasislack, appliziert und zwischengetrocknet. Auf diese noch nicht ausgehärtete Schicht wird der Klarlack aufgetragen, wonach die beiden Schichten gemeinsam gehärtet werden (Naß-in-naß-Verfahren). Werden Kunststoffe als Substrate verwendet, werden bekanntermaßen an Stelle der Elektrotauchlacke Hydrogrundierungen angewandt.

Das Naß-in-naß-Verfahren für die Herstellung von farb- und/oder effektgebenden Mehrschichtlackierungen ist beispielsweise in den Patentschriften US-A-3,639,147, DE-A-3 3 33 072, DE-A-38 14 853, GB-A-2 012 191, US-A-3,953,644, EP-A-0 260 447, DE-A-39 03 804, EP-A-0 320 552, DE-A-36 28 124, US-A-4,719,132, EP-A-0 297 576, EP-A-0 069 936, EP-A-0 089 497, EP-A-0 195 931, EP-A-0 228 003, EP-A-0 038 127 und DE-A-28 18 100 beschrieben.

Für das optische oder visuelle Erscheinungsbild und die Witterungsbeständigkeit sind vor allem die beiden obersten Schichten der Mehrschichtlackierung verantwortlich. So gibt der Basislack, insbesondere Wasserbasislack, der Mehrschichtlackierung die Farbe und/oder optischen Effekte wie Metallic-Effekte oder Interferenzeffekte, während der Klarlack neben der Kratz- und Etchbeständigkeit, d. h. die Beständigkeit gegen umweltbedingte schädigende Substanzen, für das sogenannte Appearance, d. h. der Glanz, die Brillanz und der Verlauf, sorgt. Wasserbasislack und Klarlack müssen hierbei sehr fein aufeinander abgestimmt sein, um einen Verbund mit dem gewünschten vorteilhaften Eigenschaftsprofil zu liefern.

Wasserbasislacke sowie die entsprechenden Lackierungen, welche diesen Anforderungen im wesentlichen gerecht werden, sind aus den Patentschriften EP-A-0 089 497, EP-A-0 256 540, EP-A-0 260 447, EP-A-0 297 576, WO 96/12747, EP-A-0 523 610, EP-A-0 228 003, EP-A-0 397 806, EP-A-0 574 417, EP-A-0 531 510, EP-A-0 581 211, EP-A-0 708 788, EP-A-0 593 454, DE-A-43 28 092, EP-A-0 299 148, EP-A-0 394 737, EP-A-0 590 484, EP-A-0 234 362, EP-A-0 234 361, EP-A-0 543 817, WO 95/14721, EP-A-0 521 928, EP-A-0 522 420, EP-A-0 522 419, EP-A-0 649 865, EP-A-0 536 712, EP-A-0 596 460, EP-A-0 596 461, EP-A-0 584 818, EP-A- 0 669 356, EP-A-0 634 431, EP-A-0 678 536, EP-A-0 354 261, EP-A-0 424 705, WO 97/49745, WO 97/49747 oder EP-A-0 401 565 bekannt.

Für die Herstellung von einschichtigen oder mehrschichtigen Klarlackierung werden heutzutage die üblichen und bekannten Einkomponenten (1K)-, Zweikomponenten (2K)-, Mehrkomponenten (3K, 4K)- Pulver- oder Pulverslurry-Klarlacke oder UV-härtbare Klarlacke verwendet.

Einkomponenten(1K)-, Zweikomponenten(2K)- oder Mehrkomponenten(3K, 4K)-Klarlacke werden beispielsweise in den Patentschriften US-A-5,474,811, US-A-5,356,669, US-A-5,605,965, WO 94/10211, WO 94/10212, WO 94/10213, EP-A-0 594 068, EP-A-0 594 071, EP-A-0 594 142, EP-A-0 604 992, WO 94/22969, EP-A-0 596 460 oder WO 92/22615 beschrieben.

Pulverklarlacke sind beispielsweise aus der deutschen Patentschrift DE-A-42 22 194 oder der Produkt-Information der Firma BASF Lacke + Farben AG, "Pulverlacke", 1990 bekannt.

Bei Pulverslurry-Lacken handelt es sich um Pulverlacke in Form wäßriger Dispersionen. Derartige Slurries sind beispielsweise in der US Patentschrift US-A-4,268,542 und den deutschen Patentanmeldungen DE-A-195 18 392.4 und DE-A-196 13 547 und der nicht vorveröffentlichten deutschen Patentanmeldung DE-A-198 14 471.7 beschrieben.

UV-härtbare Klarlacke gehen beispielsweise aus den Patentschriften EP-A-0 540 884, EP-A-0 568 967 oder US-A-4,675,234 hervor.

Jeder dieser Klarlacke weist spezifische Stärken und Schwächen auf So erhält man mit Hilfe dieser Klarlacke Mehrschichtlackierungen, die den optischen Anforderungen genügen. Indes sind die kratzfesten Einkomponenten(1K) -Klarlacke manchmal nicht genügend witterungsbeständig, wogegen die witterungsbeständigen Zweikomponenten (2K)- oder Mehrkomponenten(3K, 4K)-Klarlacke oftmals nicht genügend kratzfest sind. Manche Einkomponenten(1K) -Klarlacke sind zwar kratzfest und witterungsstabil, weisen aber in Kombination mit häufig angewandten Wasserbasislacken Oberflächenstörungen wie Schrumpf (wrinkling) auf

Pulverklarlacke, Pulverslurry-Klarlacke und UV-härtbare Klarlacke dagegen weisen eine nicht völlig befriedigende Zwischenschichthaftung auf, ohne daß die Probleme der Kratzfestigkeit oder der Etchbeständigkeit völlig gelöst wären.

Aus der EP-A-0 568 967 ist ein Verfahren zur Herstellung von Mehrschichtlackierungen bekannt, bei dem eine thermisch härtbare Klarlackschicht nach dem Naß-in-naß-Verfahren auf eine pigmentierte Basistackschicht aufgetragen wird, wonach die beiden Schichten in der Wärme gemeinsam ausgehärtet werden. Auf die ausgehärtete Klarlackschicht wird anschließend mindestens eine weitere Klarlackschicht auf der Basis von mit aktinischer Strahlung härtbaren Beschichtungsstoffen aufgetragen und mit aktinischer Strahlung oder mit aktinischer Strahlung und thermisch ausgehärtet. Dieses Verfahren liefert Klarlacküberzüge von hoher Chemikalienfestigkeit und optischer Qualität Indes ist die Kratzfestigkeit nicht befriedigend.

Außerdem geht aus der EP-A-0 568 967 ein Verfahren hervor, bei dem ein mit aktinischer Strahlung härtbarer Beschichtungsstoff auf die pigmentierte Basislackschicht aufgetragen und ausgehärtet wird. Anschließend wird eine weitere Schicht desselben Beschichtungsstoffs appliziert und mit aktinischer Strahlung gehärtet. Es resultiert zwar eine hochglänzende Oberfläche ohne wahrnehmbare Struktur, indes vergilbt der betreffende Klarlacküberzug. Auch die Kratzfestigkeit läßt nach wie vor zu wünschen übrig.

In neuerer Zeit wurden sogenannte Sol-Gel-Klarlacke auf Basis von siloxanhaltigen Lackformulierungen entwickelt, die durch Hydrolyse und Kondensation von Silanverbindungen erhalten werden. Diese Lacke, die als Überzugsmittel für Beschichtungen von Kunststoffen verwendet werden, werden beispielsweise in den deutschen Patentschriften DE-A-43 03 570, DE-A-34 07 087, DE-A-40 11 045, DE-A-40 25 215, DE-A-38 28 098, DE-A-40 20 316 oder DE-A-41 22 743 beschrieben.

Sol-Gel-Klarlacke verleihen Kunststoff Substraten wie z. B. Brillengläsern oder Motorradhelm-Visieren eine sehr gute Kratzfestigkeit. Diese Kratzfestigkeit wird von den vorstehend beschriebenen bekannten OEM (Original Equipment Manufacturing)-Klarlacken, die üblicherweise bei der Erstlackierung von Fahrzeugen verwendet werden, nicht erreicht. Seitens der Automobilindustrie wird nun die Anforderung gestellt, diese verbesserte Kratzfestigkeit auch auf die bei der Lackierung von Automobilen verwendeten Klarlackschichten zu übertragen. Hierbei sollen vor allem die besonders stark beanspruchten Teile der Automobilkarosserien wie Motorhaube, Stoßfänger, Schweller oder Türen im Bereich der Türgriffe besser geschützt werden.

Der Ersatz der üblicherweise in der Automobillackierung eingesetzten OEM-Klarlacke oder OEM-Pulverslurry-Klarlacke durch Sol-Gel-Klarlacke ist indes nicht ohne weiteres möglich, weil sie hierfür z. B. zu spröde sind oder weil bei dem Versuch, sie an die OEM-Anforderungen anzupassen, häufig nur schlechte optische Eigenschaften (Appearance) erzielt werden. Des weiteren können sie nicht in Dicken > 8 bis 10 µm appliziert werden. Außerdem können Bestandteile der Sol-Gel-Klarlacke bei ihrer Trocknung und/oder Härtung wegschlagen, d. h., sie werden vom Substrat absorbiert, wodurch die Härte der betreffenden Klarlackschichten verloren geht. Vor allem aber sind die Sol-Gel-Klarlacke zu teuer.

Der ökonomisch günstigere Einsatz der Sol-Gel-Klarlacke als zusätzliche Überzugsschicht über die bisher verwendeten Klarlacke ergibt Haftungsprobleme innerhalb der mehrschichtigen Klarlackierung zwischen der Klarlackschicht und der Sol-Gel-Schicht, die insbesondere nach Steinschlag und bei Belastung durch Schwitzwasser auftreten. Diese Probleme werden in manchen Fällen noch dadurch verstärkt, daß auch die Haftung zwischen der Klarlackschicht und dem Substrat in Mitleidenschaft gezogen wird.

Diese Probleme können bis zu einem gewissen Grad dadurch gelöst werden, daß man die Klarlackschicht, welche mit dem Sol-Gel-Klarlack überzogen werden soll, nur teilweise aushärtet, so daß der Sol-Gel-Überzug bei dem gemeinsamen Aushärten gewissermaßen chemisch auf der Klarlackschicht verankert werden kann. Indes erfordert die zweite Klarlackschicht für ihre Aushärtung eine lange Ofentrocknungszeit, was ein erheblicher Nachteil ist.

Aufgabe der vorliegenden Erfindung ist es, einen neuen thermisch sowie gegebenenfalls mit aktinischer Strahlung härtbaren Beschichtungsstoff bereitzustellen, welcher eine neue mehrschichtige Klarlackierung liefert, welche die Nachteile des Standes der Technik nicht mehr länger aufweist, sondern in einfacher Weise herstellbar, hochkratzfest, witterungsstabil, vergilbungsfrei, hart, flexibel und von Oberflächenstörungen frei ist, auf allen Substraten sowie innerhalb der Klarlackierung eine vorzügliche Haftung aufweist und sich in der für einen hervorragenden optischen Gesamteindruck notwendigen hohen Schichtdicke herstellen läßt. Außerdem ist es die Aufgabe der vorliegenden

Erfindung ein neues Verfahren der Herstellung solcher mehrschichtiger Klarlackschichten aus mindestens einem neuen Beschichtungsstoff bereitzustellen.

Demgemäß wurde der neue thermisch sowie gegebenenfalls mit aktinischer Strahlung härtbare Beschichtungsstoff gefunden, welcher

A) mindestens ein Bindemittel mit mindestens zwei funktionellen Gruppen (a1), welche mit komplementären funktionellen Gruppen (b1) im Vernetzungsmittel (B) thermische Vernetzungsreaktionen eingehen können, und

B) mindestens ein Vernetzungsmittel mit mindestens zwei funktionellen Gruppen (b1), welche mit den komplementären funktionellen Gruppen (a1) im Bindemittel (A) thermische Vernetzungsreaktionen eingehen können, sowie gegebenenfalls

C) mindestens einen Bestandteil, welcher mit aktinischer Strahlung vernetztbar ist

D) mindestens einen Photoinitiator,

E) mindestens einen Initiator der thermischen Vernetzung,

F) mindestens einen mit aktinischer Strahlung und/oder thermisch härtbaren Reaktivverdünner;

G) mindestens ein Lackadditiv und/oder

H) mindestens ein organisches Lösemittel

enthält, wobei mindestens ein Bindemittel (A) mindestens ein olefinisch ungesättigtes Polysiloxanmakromonomer, welches im statistischen Mittel mindestens 3,0 Doppelbindungen pro Molekül aufweist, einpolymerisiert enthält.

Im folgenden wird der neue thermisch sowie gegebenenfalls mit aktinischer Strahlung härtbare Beschichtungsstoff als "erfindungsgemäßer Beschichtungsstoff" bezeichnet.

Des weiteren wurde die neue hochkratzfeste mehrschichtige Klarlackierung KL für ein grundiertes oder ungrundiertes Substrat gefunden, welche herstellbar ist, indem man

(1) mindestens eine Klarlackschicht I aus einem thermisch sowie gegebenenfalls mit aktinischer Strahlung härtbaren Beschichtungsstoff I auf die Oberfläche des Substrats appliziert und

(1.1) partiell oder
(1.2) vollständig

aushärtet und

(2) eine weitere Klarlackschicht II aus einem thermisch sowie gegebenenfalls mit aktinischer Strahlung härtbaren Beschichtungsstoff II auf die Oberfläche der Klarlackschicht(en) I appliziert,

(3) wonach man

(3.1) die Klarlackschichten I und II gemeinsam oder
(3.2) die Klarlackschicht II alleine

thermisch sowie gegebenenfalls mit aktinischer Strahlung aushärtet,

wobei der Beschichtungsstoff II und/oder der Beschichtungsstoff I, insbesondere der Beschichtungsstoff II, ein erfindungsgemäßer Beschichtungsstoff ist.

Die neue hochkratzfeste mehrschichtige Klarlackierung KL wird im folgenden als die "erfindungsgemäße Klarlackierung KL" bezeichnet.

Des weiteren wurde das neue Verfahren zur Herstellung einer hochkratzfesten mehrschichtigen Klarlackierung KL auf einem grundierten oder ungrundierten Substrat gefunden, bei dem man

(1) mindestens eine Klarlackschicht I aus einem thermisch sowie gegebenenfalls mit aktinischer Strahlung härtbaren Beschichtungsstoff I auf die Oberfläche des Substrats appliziert und

(1.1) partiell oder
(1.2) vollständig

aushärtet und

(2) eine weitere Klarlackschicht II aus einem thermisch sowie gegebenenfalls mit aktinischer Strahlung härtbaren Beschichtungsstoff II auf die Oberfläche der Klarlackschicht(en) I appliziert,

(3) wonach man

(3.1) die Klarlackschichten 1 und II gemeinsam oder
(3.2) die Klarlackschicht II alleine

thermisch sowie gegebenenfalls mit aktinischer Strahlung aushärtet,

wobei der Beschichtungsstoff II und/oder der Beschichtungsstoff I, insbesondere der Beschichtungsstoff II, ein erfindungsgemäßer Beschichtungsstoff ist.

Im folgenden wird das neue Verfahren zur Herstellung von hochkratzfesten Klarlackierungen KL als "erfindungsgemäßes KL-Verfahren" bezeichnet.

Außerdem wurde die neue hochkratzfeste farb- und/oder effektgebende Mehrschichtlackierung ML für ein grundiertes oder ungrundiertes Substrat gefunden, welche herstellbar ist, indem man

(1) mindestens eine färb- und/oder effektgebende Basislackschicht III aus einem thermisch sowie gegebenenfalls mit aktinischer Strahlung härtbaren pigmentierten Beschichtungsstoff III auf die Oberfläche des Substrats appliziert und, ohne auszuhärten, trocknet,

(2) mindestens eine Klarlackschicht I aus einem thermisch sowie gegebenenfalls mit aktinischer Strahlung härtbaren Beschichtungsstoff I auf die Oberfläche der Basislackschicht III appliziert und

(2.1) für sich alleine partiell,
(2.2) gemeinsam mit der Basislackschicht III partiell oder
(2.3) gemeinsam mit der Basislackschicht III vollständig

thermisch sowie gegebenenfalls mit aktinischer Strahlung aushärtet und

(3) eine weitere Klarlackschicht II aus einem thermisch sowie gegebenenfalls mit aktinischer Strahlung härtbaren Beschichtungsstoff II auf die Oberfläche der Klarlackschicht(en) I appliziert,

(4) wonach man

(4.1) die Klarlackschichten I und II sowie die Basislackschicht III gemeinsam oder
(4.2) die Klarlackschicht II alleine

thermisch sowie gegebenenfalls mit aktinischer Strahlung aushärtet,

wobei der Beschichtungsstoff II und/oder der Beschichtungsstoff I, insbesondere der Beschichtungsstoff II, ein erfindungsgemäßer Beschichtungsstoff ist.

Im folgenden wird die neue farb- und/oder effektgebende Mehrschichtlackierung ML als "erfindungsgemäße Mehrschichtlackierung ML" bezeichnet.

Darüber hinaus wurde das neue Verfahren zur Herstellung einer hochkratzfesten farb- und/oder effektgebende Mehrschichtlackierung ML auf einem grundierten oder ungrundierten Substrat gefunden, bei dem man

(1) mindestens eine farb- und/oder effektgebende Basislackschicht III aus einem thermisch sowie gegebenenfalls mit aktinischer Strahlung härtbaren pigmentierten Beschichtungsstoff III auf die Oberfläche des Substrats appliziert und, ohne auszuhärten, trocknet,

(2) mindestens eine Klarlackschicht I aus einem thermisch sowie gegebenenfalls mit aktinischer Strahlung härtbaren Beschichtungsstoff I auf die Oberfläche der Basislackschicht III appliziert und

(2.1) für sich alleine partiell,
(2.2) gemeinsam mit der Basislackschicht III partiell oder
(2.3) gemeinsam mit der Basislackschicht III vollständig

thermisch sowie gegebenenfalls mit aktinischer Strahlung aushärtet und

(3) eine weitere Klarlackschicht II aus einem thermisch sowie gegebenenfalls mit aktinischer Strahlung härtbaren Beschichtungsstoff II auf die Oberfläche der Klarlackschicht(en) I appliziert,

(4) wonach man

(4.1) die Klarlackschichten I und II sowie die Basislackschicht III gemeinsam oder
(4.2) die Klarlackschicht II alleine

thermisch sowie gegebenenfalls mit aktinischer Strahlung aushärtet,

wobei der Beschichtungsstoff II und/oder der Beschichtungsstoff I, insbesondere der Beschichtungsstoff II, ein erfindungsgemäßer Beschichtungsstoff ist.

Im folgenden das neue Verfahren zur Herstellung einer hochkratzfesten farb- und/oder effektgebende Mehrschichtlackierung ML als "erfindungsgemäßes ML-Verfahren" bezeichnet.

Nicht zuletzt wurden grundierte oder ungrundierte Substrate gefunden, welche mit mindestens einer erfindungsgemäßen Klarlackierung KL und/oder mit mindestens einer erfindungsgemäßen Mehrschichtlackierung ML beschichtet sind.

Im Rahmen der vorliegenden Erfindung bedeutet der Begriff "thermische Härtung" die durch Hitze initiierte Härtung einer Lackschicht aus einem Beschichtungsstoff: bei der üblicherweise ein separat vorliegendes Vernetzungsmittel angewandt wird. Üblicherweise wird dies von der Fachwelt als Fremdvemetzung bezeichnet. Sind die Vernetzungsmittel in die Bindemittel bereits eingebaut, spricht man auch von Selbstvernetzung. Erfindungsgemäß ist die Fremdvemetzung von Vorteil und wird deshalb bevorzugt angewandt.

Im Rahmen der vorliegenden Erfindung ist unter aktinischer Strahlung Elektronenstrahlung oder vorzugsweise UV-Strahlung zu verstehen. Die Härtung durch UV-Strahlung wird üblicherweise durch radikalische oder kationische Photoinitiatoren initiiert und ist ihrem Mechanismus nach eine radikalische oder kationische Photopolymerisation.

Werden die thermische und die Härtung mit aktinischem Licht bei einem Beschichtungsstoff gemeinsam angewandt, spricht man auch von "Dual Cure".

Im Hinblick auf den Stand der Technik war es überraschend und für den Fachmann nicht vorhersehbar, daß die komplexe Aufgabe, welche der Erfindung zugrunde liegt, mit Hilfe des erfindungsgemäßen Beschichtungsstoffs, der erfindungsgemäßen Klarlackierung KL und der erfindungsgemäßen Mehrschichtlackierung ML sowie der erfindungsgemäßen KL- und ML-Verfahren gelöst werden konnte. Besonders überraschend ist, daß nicht nur die Zwischenschichthaftung innerhalb der erfindungsgemäßen Klarlackierung KL, sondern auch die Haftung zu der Basislackschicht III innerhalb der erfindungsgemäßen Mehrschichtlackierung ML weit über das bekannte Maß hinaus verbessert sind. Dabei weisen die erfindungsgemäße Klarlackierung KL und die erfindungsgemäße Mehrschichtlackierung ML hervorragende optische Eigenschaften auf, insbesondere eine hohe Fülle, hohe DOI-Werte, einen hohen Glanz und keine Vergilbung. Bei alledem sind die erfindungsgemäße Klarlackierung KL und die erfindungsgemäße Mehrschichtlackierung ML von einer hervorragenden Witterungs- und Chemikalienstabilität. Nicht zuletzt aber sind sie außerordentlich kratzfest.

Der erfindungsgemäße Beschichtungsstoff enthält als wesentlichen Bestandteil mindestens ein Bindemittel (A), welches mindestens ein olefinisch ungesättigtes Polysiloxanmakromonomer, welches im statistischen Mittel mindestens 3,0 Doppelbindungen pro Molekül aufweist, einpolymerisiert enthält.

Erfindungsgemäß ist es von Vorteil, wenn das Polysiloxanmakromonomer im statistischen Mittel mindestens 4,0, besonders bevorzugt 5,0 und insbesondere 5,5 Doppelbindungen pro Molekül aufweist. Um die erfindungsgemäßen Vorteile zu erzielen, reichen in den allermeisten Fällen im statistischen Mittel 10,5, vorzugsweise 9,0, besonders bevorzugt 8,5 und insbesondere 8,0 Doppelbindungen pro Molekül aus. Besondere Vorteile werden erhalten, wenn das Polysiloxanmakromonomer im statistischen Mittel 5,5 bis 6,5, insbesondere 6,0, Doppelbindungen pro Molekül enthält

Erfindungsgemäß sind insbesondere Polysiloxanmakromonomere geeignet, die ein zahlenmittleres Molekulargewicht Mn von 500 bis 100.000, bevorzugt von 1.000 bis 50.000, besonders bevorzugt 2.000 bis 30.000 und insbesondere 2.500 bis 20.000 Dalton aufweisen.

Besonders gut geeignet sind Polysiloxanmakromonomere, welche dreidimensional vernetzt vorliegen.

Ganz besonders gut geeignet sind Polysiloxanmakromonomere der vorstehend beschriebenen Art, bei denen

es sich um Alkyl-, Cycloalkyl-, Alkyl-Aryl-, Alkyl-Cycloalkyl-, Cycloalkyl-Aryl- oder Arylsiloxanharze handelt. Vorteilhafterweise enthalten die Alkylreste 1 bis 10, besonders bevorzugt 1 bis 5 und insbesondere 1 bis 3 Kohlenstoffatome, die Cycloalkylreste 3 bis 10, besonders bevorzugt 4 bis 8 und insbesondere 5 bis 7 Kohlenstoffatome und die Arylreste 6 bis 12 und insbesondere 6 bis 10 Kohlenstoffatome.

Von diesen Resten sind die Alkylreste von besonderem Vorteil und werden deshalb besonders bevorzugt verwendet Hinsichtlich der Herstellung der Polysiloxanmakromonomeren und ihrer technischen Wirkungen in den Bindemitteln (A) und den erfindungsgemäßen Beschichtungsstoffen erweisen sich Methylreste als ganz besonders vorteilhaft. Sie werden deshalb ganz besonders bevorzugt verwendet.

Die olefinisch ungesättigten Doppelbindungen der erfindungsgemäß zu verwendenden Polysiloxanmakromonomeren befinden sich in Acryl-, Methacryl-, Ethacryl-, Vinyl-, Allyl- und/oder Crotonylgruppen. Von diesen bieten die Acryl-, Methacryl- und die Vinylgruppen, insbesondere aber die Acrylgruppen, besondere Vorteile und werden deshalb ganz besonders bevorzugt verwendet.

Die Herstellung der vorstehend beschriebenen erfindungsgemäß zu verwendenden Polysiloxanmakromonomeren erfolgt nach den üblichen und bekannten Methoden der Polysiloxanchemie. Die erfindungsgemäß zu verwendenden Polysiloxanmakromonomeren sind außerdem am Markt erhältlich und werden beispielsweise von der Firma Tego Chemie Service GmbH unter dem Handelsnamen Tego® LA-S 517 vertrieben.

Die erfindungsgemäß zu verwendenden Bindemittel (A) können die Polysiloxanmakromonomeren in breit variierenden Mengen einpolymerisiert enthalten. Aufgrund ihrer hohen Funktionalität von im Mittel mehr als 3,0 Doppelbindungen pro Molekül reicht in den allermeisten Fällen ein Anteil bis zu 15 Gew.-%, vorzugsweise bis zum 10 Gew.-%, besonders bevorzugt bis zu 5 Gew.-% und insbesondere bis zu 2 Gew.-%, jeweils bezogen auf das Bindemittel (A), aus, um die erfindungsgemäßen technischen Effekte und Vorteile zu erzielen. Hierbei erweist es sich erfindungsgemäß als ganz besonderer Vorteil, daß bereits Mengen von mindestens 0,01 Gew.-%, vorzugsweise mindestens 0,05 Gew.-%, besonders bevorzugt mindestens 0,08 Gew.-% und insbesondere mindestens 0,1 Gew.-%, jeweils bezogen auf das Bindemittel (A), die erfindungsgemäßen technischen Effekte und Vorteile hervorrufen.

Die erfindungsgemäß zu verwendenden Bindemittel (A) enthalten mindestens zwei, insbesondere mindestens drei funktionelle Gruppen (a1), welche mit komplementären funktionellen Gruppen (b1) im Vernetzungsmittel (B) thermische Vernetzungsreaktionen eingehen können.

Beispiele geeigneter erfindungsgemäß zu verwendender komplementärer reaktiver funktioneller Gruppen (a1) und (b1), welche Vernetzungsreaktionen eingehen, sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest die Variablen $R^1$ und $R^2$ stehen für gleiche oder verschiedene aliphatische Reste oder sind miteinander zu einem aliphatischen oder heteroaliphatischen Ring verknüpft.

**Übersicht: Beispiele komplementärer funktioneller Gruppen (a1) und (b2) in**

**Bindemittel (A) und Vernetzungsmittel (B)** oder

**Vernetzungsmittel (B) und Bindemittel (A)**

| | |
|---|---|
| -SH | -C(O)-OH |
| $-NH_2$ | -C(O)-O-C(O)- |
| -OH | -NCO |
| $-O-(CO)-NH-(CO)-NH_2$ | -NH-C(O)-OR |
| $-O-(CO)-NH_2$ | $-CH_2-OH$ |
| | $-CH_2-O-CH_3$ |
| | $-NH-C(O)-CH(-C(O)OR)_2$ |

| | |
|---|---|
| | -NH-C(O)-CH(-C(O)OR)(-C(O)-R) |
| | -NH-C(O)-$NR^1R^2$ |
| | = $Si(OR)_2$ |
| | 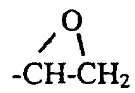 |
| -C(O)-OH | 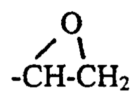 |
| -O-C(O)-CR=CH2 | -OH |
| -O-CR=$CH_2$ | -$NH_2$ |
| | -C(O)-$CH_2$-C(O)-R |
| | -CH=$CH_2$ |

Die Auswahl der jeweiligen komplementären Gruppen (a1) und (b2) richtet sich zum einen danach, daß sie bei der Lagerung keine unerwünschten Reaktionen eingehen und/oder gegebenenfalls die Härtung mit aktinischer Strahlung nicht stören oder inhibieren dürfen, und zum anderen danach, in welchem Temperaturbereich die thermische Härtung erfolgen soll.

Hierbei ist es, insbesondere im Hinblick auf thermisch sensible Substrate wie Kunststoffe, erfindungsgemäß von Vorteil, einen Temperaturbereich zu wählen, welcher 100 °C, insbesondere 80 °C nicht überschreitet. Im Hinblick auf diese Rahmenbedingungen haben sich Hydroxylgruppen und Isocyanatgruppen oder Carboxylgruppen und Epoxygruppen als komplementäre funktionelle Gruppen als vorteilhaft erwiesen, weswegen sie in den erfindungsgemäßen Beschichtungsstoffen, welche als Zwei- oder Mehrkomponentensysteme vorliegen, erfindungsgemäß bevorzugt angewandt werden. Besondere Vorteile resultieren, wenn die Hydroxylgruppen als funktionelle Gruppen (a1) und die Isocyanatgruppen als funktionelle Gruppen (b2) verwendet werden.

Können höhere Vernetzungstemperaturen, beispielsweise von 100 °C bis 180 °C, angewandt werden, kommen als erfindungsgemäße Beschichtungsstoffe auch Einkomponentensysteme in Betracht, worin die funktionellen Gruppen (a1) vorzugsweise Thio-, Amino-, Hydroxyl-, Carbamat-, Allophanat-, Carboxy-, und/oder (Meth)acrylatgruppen, insbesondere aber Hydroxylgruppen und die funktionellen Gruppen (b1) vorzugsweise Anhydrid-, Carboxy-, Epoxy-, blockierte Isocyanat-, Urethan-, Methylol-, Methylolether-, Siloxan-, Amino-, Hydroxy- und/oder beta-Hydroxyalkylamidgruppen sind.

Somit handelt es sich bei den erfindungsgemäß bevorzugten Bindemitteln (A) um hydroxylgruppenhaltige oligomere oder polymere Harze.

Beispiele geeigneter erfindungsgemäß besonders bevorzugter Bindemittel (A) sind hydroxylgruppenhaltige lineare und/oder verzweigte und/oder blockartig, kammartig und/oder statistisch aufgebaute Poly(meth)acrylate oder Acrylatcopolymerisate, Polyester, Alkyde, Aminoplastharze, Polyurethane, acrylierte Polyurethane, acrylierte Polyester, Polylactone, Polycarbonate, Polyether, Epoxidharz-Amin-Addukte, (Meth)Acrylatdiole, partiell verseifte Polyvinylester oder Polyharnstoffe, von denen die Acrylatcopolymerisate, die Polyester, die Polyurethane, die Polyether und die Epoxidharz-Amin-Addukte, insbesondere aber die Acrylatcopolymerisate, besonders vorteilhaft sind und deshalb besonders bevorzugt verwendet werden.

Im Falle von Bindemitteln für wäßrige Lacke enthalten die Bindemittel ionische oder nichtionische Gruppen, welche eine Wasserlöslichkeit oder Wasserdispergierbarkeit gewährleisten.

Besonders bevorzugte Acrylatcopolymerisate (A) sind herstellbar, indem (m1) 10 bis 70 Gew.-%, vorzugsweise 20 bis 60 Gew.-%, eines hydroxylgruppenhaltigen Esters der Acrylsäure oder Methacrylsäure oder eines Gemisches aus solchen Monomeren, (m2) 10 bis 70 Gew.-%, vorzugsweise 20 bis 60 Gew.-%, eines von (m1) verschiedenen aliphatischen oder cycloaliphatischen Esters der Acrylsäure oder Methacrylsäure mit vorzugsweise mindestens 4 C-Atomen im Alkoholrest oder eines Gemisches aus solchen Monomeren, 0,01 bis 15 Gew.-%, vorzugsweise 0, 05 bis 10 Gew.-%, des erfindungsgemäß zu verwendenden Polysiloxanmakromonomeren, (m3) 0 bis 2 Gew.-%, vorzugsweise 0 bis 1 Gew.-%, einer ethylenisch ungesättigten Carbonsäure oder einer Mischung aus ethylenisch ungesättigten Carbonsäuren und (m4) 0 bis 30 Gew.-%, vorzugsweise 0 bis 20 Gew.-%, eines von (m1), (m2) und (m3) verschiedenen ethylenisch ungesättigten Monomers oder eines Gemisches aus solchen Monomeren zu einem Polyacrylatharz mit einer Säurezahl von 0 bis 15, vorzugsweise 0 bis 8, einer Hydroxylzahl von 80 bis 140, vorzugsweise 80 bis 120, und einem zahlenmittleren Molekulargewicht von 1.500 bis 10.000, vorzugsweise 2.000 bis 5.000 polymerisiert werden, wobei die Summe der Gewichtsanteile der Komponenten (m1), (m2), (m3) und (m4) stets 100 Gew.-% ergibt

Die Herstellung der bevorzugt eingesetzten Acrylatcopolymerisate (A) kann nach allgemein gut bekannten Polymerisationsverfahren in Masse, Lösung oder Emulsion erfolgen. Polymerisationsverfahren zur Herstellung von Polyacrylatharzen sind allgemein bekannt und vielfach beschrieben (vgl. z.B.: Houben Weyl, Methoden der organischen Chemie, 4. Auflage, Band 14/1, seite 24 bis 255 (1961)).

Weitere Beispiele geeigneter (Co)Polymerisationsverfahren für die Herstellung der Acrylatcopolymerisate (A) werden in den Patentschriften DE-A-197 09 465, DE-C-197 09 476, DE-A-28 48 906, DE-A-195 24 182, EP-A-0 554 783, WO 95/27742, DE-A-38 41 540 oder WO 82/02387 beschrieben.

Vorteilhalft sind Taylorreaktoren, insbesondere für die Copolymerisation in Masse, Lösung oder Emulsion.

Taylorreaktoren, die der Umwandlung von Stoffen unter den Bedingungen der Taylorströmung dienen, sind bekannt. Sie bestehen in wesentlichen aus zwei koaxialen konzentrisch angeordneten Zylindern, von denen der äußere feststehend ist und der innere rotiert. Als Reaktionsraum dient das Volumen, das durch den Spalt der Zylinder gebildet wird. Mit zunehmender Winkelgeschwindigkeit $\omega_i$ des Innenzylinders treten einer Reihe unterschiedlicher Strömungsformen auf, die durch eine dimensionslose Kennzahl, die sogenannte Taylor-Zahl Ta, charakterisiert sind. Die Taylor-Zahl ist zusätzlich zur Winkelgeschwindigkeit des Rührers auch noch abhängig von der kinematischen Viskosität $\nu$ des Fluids im Spalt und von den geometrischen Parametern, dem äußeren Radius des Innenzylinders $r_i$, dem inneren Radius des Außenzylinders $r_a$ und der Spaltbreite d, der Differenz beider Radien, gemäß der folgenden Formel:

$$Ta = \omega_i\, r_i\, d\, \nu^{-1} (d/\, r_i)^{1/2} \qquad (I)$$

mit $d = r_a - r_i$.

Bei niedriger Winkelgeschwindigkeit bildet sich die laminare Couette-Strömung, eine einfache Scherströmung, aus. Wird die Rotationsgeschwindigkeit des Innenzylinders weiter erhöht, treten oberhalb eines kritischen Werts abwechselnd entgegengesetzt rotierende (kontrarotierende) Wirbel mit Achsen längs der Umfangsrichtung auf Diese sogenannten Taylor-Wirbel sind rotationssymmetrisch und haben einen Durchmesser, der annähernd so groß ist wie die Spaltbreite. Zwei benachbarte Wirbel bilden ein Wirbelpaar oder eine Wirbelzelle.

Dieses Verhalten beruht darauf, daß bei der Rotation des Innenzylinders mit ruhendem Außenzylinder die Fluidpartikel nahe des Innenzylinders einer stärkeren Zentrifugalkraft ausgesetzt sind als diejenigen, die weiter vom inneren Zylinder entfernt sind. Dieser Unterschied der wirkenden Zentrifugalkräfte drängt die Fluidpartikel vom Innen- zum Außenzylinder. Der Zentrifugalkraft wirkt die Viskositätskraft entgegen, da bei der Bewegung der Fluidpartikel die Reibung überwunden werden muß. Nimmt die Rotationsgeschwindigkeit zu, dann nimmt auch die Zentrifugalkraft zu. Die Taylor-Wirbel entstehen, wenn die Zentrifugalkraft größer als die stabilisierende Viskositätskraft wird.

Bei der Taylor-Strömung mit einem geringen axialen Strom wandert jedes Wirbelpaar durch den Spalt, wobei

nur ein geringer Stoffaustausch zwischen benachbarten Wirbelpaaren auftritt. Die Vermischung innerhalb solcher Wirbel paare ist sehr hoch, wogegen die axiale Vermischung über die Paargrenzen hinaus nur sehr gering ist. Ein Wirbelpaar kann daher als gut durchmischter Rührkessel betrachtet werden. Das Strömungsystem verhält sich somit wie ein ideales Strömungsrohr, indem die Wirbelpaare mit konstanter Verweilzeit wie ideale Rührkessel durch den Spalt wandern.

Von besonderem Vorteil sind hierbei Taylorreaktoren mit eineräußeren Reaktorwand und einem hierin befindlichen konzentrisch oder exzentrisch angeordneten Rotor, einem Reaktorboden und einem Reaktordeckel, welche zusammen das ringspaltförnige Reaktorvolumen definieren, mindestens einer Vorrichtung zur Zudosierung von Edukten sowie einer Vorrichtung für den Produktablauf, wobei die Reaktorwand und/oder der Rotor geometrisch derart gestaltet ist oder sind, daß auf im wesentlichen der gesamten Reaktorlänge im Reaktorvolumen die Bedingungen für die Taylorströmung erfüllt sind, d.h., daß sich der Ringspalt in Durchflußrichtung verbreitert.

Die eingesetzten Acrylatcopolymerisate (A) werden vorzugsweise mit Hilfe des Lösungspolymerisationsverfahrens hergestellt Hierbei wird üblicherweise ein organisches Lösemittel bzw. Lösemittelgemisch vorgelegt und zum Sieden erhitzt. In dieses organische Lösemittel bzw. Lösemittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160 °C, vorzugsweise zwischen 130 und 150 °C. Als Polymerisationsinitiatoren werden vorzugsweise freie Radikale bildende Initiatoren eingesetzt. Initiatorkraft und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Dialkylperoxide, wie Di-tert-Butylperoxid oder Dicumyl-peroxid; Hydroperoxide, wie Cumolhydroperoxid oder tert- Butylhydroperoxid; Perester, wie tert.-Butylperbenzoat, tert.-Butylperpivalat, tert-Butylper-3,5,5-trimethyl- hexanoat oder tert-Butylper-2-ethylhexanoat; Azodinitrile wie Azobisisobutyronitril oder C-C-spaltende Initiatoren wie Benzpinakolsilylether.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, daß die eingesetzten Polyacrylatharze ein zahlenmittleres Molekulargewicht von 1.500 bis 10.000, vorzugsweise 2.000 bis 5.000 (bestimmt durch Gelpermeationschromatographie unter Verwendung von Polystyrol als Eichsubstanz) aufweisen.

Die Säurezahl der erfindungsgemäß eingesetzten Acrylatcopolymerisate (A) kann vom Fachmann durch Einsatz entsprechender Mengen der Monomeren (m3) eingestellt werden. Analoges gilt für die Einstellung der Hydroxylzahl. Sie ist über die Menge an eingesetztem Monomer (m1) steuerbar.

Als Monomere (m1) kann im Prinzip jeder hydroxylgruppenhaltige Ester der Acrylsäure oder Methacrylsäure oder ein Gemisch aus solchen Monomeren eingesetzt werden. Als Beispiele werden genannt: Hydroxyalkylester der Acrylsäure, wie z.B. Hydroxyethylacrylat, Hydroxypropyl- acrylat, Hydroxybutylacrylat, insbesondere 4-Hydroxy- butylacrylat; Hydroxyalkylester der Methacrylsäure, wie z.B. Hydroxyethylmethacrylat, Hydroxypropylmethacrylat, Hydroxybutylmethacrylat, insbesondere 4-Hydroxybutyl- methacrylat; Umsetzungsprodukte aus cyclischen Estern, wie z.B. epsilon-Caprolacton und Hydroxyalkylestern der Acrylsäure bzw. Methacrylsäure.

Die Zusammensetzung der Monomeren (m1) wird vorzugsweise so ausgewählt, daß bei alleiniger Polymerisation der Monomeren (m1) ein Polyacrylatharz mit einer Glasüber- gangstemperatur von -50 bis +70, vorzugsweise -30 bis +50°C erhalten wird. Die Glasübergangstemperatur kann vom Fachmann unter Zuhilfenahme der Formel

$$1/T_G = \sum_{n=1}^{n=x} W_n/T_{Gn}$$

$T_G$ = Glasübergangstemperatur des Polymeren
x = Anzahl der verschiedenen einpolymerisierten Monomere,
$W_n$ = Gewichtsanteil des n-ten Monomers
$T_{Gn}$ = Glasübergangstemperatur des Homopolyrners aus dem n-ten Monomer

näherungsweise berechnet werden.

Als Monomer (m2) kann im Prinzip jeder von (m1) verschiedene aliphatische oder cycloaliphatische Ester

der Acrylsäure oder Methacrylsäure mit mindestens 4 C-Atomen im Alkoholrest oder ein Gemisch aus solchen Monomeren eingesetzt werden. Als Beispiele werden genannt: aliphatische Ester der Acryl- und Methacrylsäure mit 4 bis 20 C-Atomen im Alkoholrest, wie z.B. n-Butyl-, iso-Butyl-, tert-Butyl, 2-Ethylhexyl-, Stearyl- und Laurylacrylat und -methacrylat sowie cycloaliphatische Ester der Acryl- und Methacrylsäure wie z. B. Cyclohexylacrylat und Cyclohexylmethacrylat. Die Zusammensetzung der Monomeren (m2) wird vorzugsweise so ausgewählt, daß bei alleiniger Polymerisation der Monomeren (m2) ein Polyacrylatharz mit einer Glasübergangstemperatur von 10 bis 100, vorzugsweise 20 bis 60°C erhalten wird.

Als Monomer (m3) kann im Prinzip jede ethylenisch ungesättigte Carbonsäure oder eine Mischung aus ethylenisch ungesättigten Carbonsäuren eingesetzt werden. Als Monomer (m3) werden vorzugsweise Acrylsäure und/oder Methacrylsäure eingesetzt Als Monomer (m4) kann im Prinzip jedes von (m1), (m2) und (m3) verschiedene ethylenisch ungesättigte Monomer oder ein Gemisch aus solchen Monomeren eingesetzt werden. Als Beispiele für Monomere, die als Komponente (m4) eingesetzt werden können, werden genannt: vinylaromatische Kohlenwasserstoffe, wie Styrol, alpha-Alkylstyrol und Vinyltoluol, Amide der Acrylsäure und Methacrylsäure, wie z.B. Methacrylamid und Acrylamid, Nitrile der Methacrylsäure und Acrylsäure; Vinylether und Vinylester oder Polysiloxanmakromonomere, wie sie in den Patentschriften DE-A-38 07 571, DE-A 37 06 095, EP-B-0 358 153, US-A 4,754,014, DE-A 44 21 823 oder WO 92/22615 beschrieben werden. Als Monomere (m4) werden vorzugsweise vinylaromatische Kohlenwasserstoffe, insbesondere Styrol eingesetzt. Die Zusammensetzung der Monomere (m4) wird vorzugsweise so ausgewählt, daß bei alleiniger Polymerisation der Monomeren (m4) ein Harz mit einer Glasübergangstemperatur von 70 bis 120, vorzugsweise 80 bis 100°C erhalten wird.

Vorteilhafterweise sind die Bindemittel (A) in dem erfindungsgemäßen Beschichtungsstoff in einer Menge von 5 bis 95 Gew.-%, besonders bevorzugt 7 bis 70 Gew.-% und insbesondere 10 bis 50 Gew.-%, jeweils bezogen auf den Gesamtfeststoffgehalt des erfindungsgemäßen Beschichtungsstoffs, enthalten.

Der erfindungsgemäße Beschichtungsstoffe enthält des weiteren mindestens ein Vernetzungsmittel (B), welches mindestens zwei, insbesondere drei, der vorstehend im Detail beschriebenen komplementären funktionellen Gruppen (b1) enthält.

Handelt es sich bei dem erfindungsgemäßen Beschichtungsstoff um ein Zwei- oder Mehrkomponentensystem, werden Polyisocyanate und/oder Polyepoxide, insbesondere aber Polyisocyanate als Vernetzungsmittel (B) verwendet.

Beispiele geeigneter Polyisocyanate (B) sind organische Polyisocyanate, insbesondere sogenannte Lackpolyisocyanate, mit aliphatisch, cycloaliphatisch, araliphatisch und/oder aromatisch gebundenen, freien Isocyanatgruppen. Bevorzugt werden Polyisocyanate mit 2 bis 5 Isocyanatgruppen pro Molekül und mit Viskositäten von 100 bis 10.000, vorzugsweise 100 bis 5000 und insbesondere 100 bis 2000 mPas (bei 23°C) eingesetzt. Gegebenenfalls können den Polyisocyanaten noch geringe Mengen organisches Lösemittel, bevorzugt 1 bis 25 Gew.-%, bezogen auf reines Polyisocyanat, zugegeben werden, um so die Einarbeitbarkeit des Isocyanates zu verbessern und gegebenenfalls die Viskosität des Polyisocyanats auf einen Wert innerhalb der obengenannten Bereiche abzusenken. Als Zusatzmittel geeignete Lösemittel für die Polyisocyanate sind beispielsweise Ethoxyethylpropionat, Amylmethylketon oder Butylacetat Außerdem können die Polyisocyanate (B) in üblicher und bekannter Weise hydrophil oder hydrophob modifiziert sein.

Beispiele für geeignete Polyisocyanate (B) sind beispielsweise in "Methoden der organischen Chemie", Houben-Weyl, Band 14/2, 4. Auflage, Georg Thieme Verlag, Stuttgart 1963, Seite 61 bis 70, und von W. Siefken, Liebigs Annalen der Chemie, Band 562, Seiten 75 bis 136, beschrieben. Beispielsweise geeignet sind auch die isocyanatgruppenhaltigen Polyurethanpräpolymere, die durch Reaktion von Polyolen mit einem Überschuß an Polyisocyanaten hergestellt werden können und die bevorzugt niederviskos sind.

Weitere Beispiele geeigneter Polyisocyanate (B) sind Isocyanurat-, Biuret-, Allophanat-, Iminooxadiazindon-, Urethan-, Harnstoff- und/oder Uretdiongruppen aufweisende Polyisocyanate. Urethangruppen aufweisende Polyisocyanate werden beispielsweise durch Umsetzung eines Teils der Isocyanatgruppen mit Polyolen, wie z.B. Trimethylolpropan und Glycerin, erhalten. Vorzugsweise werden aliphatische oder cycloaliphatische Polyisocyanate, insbesondere Hexamethylendiisocyanat dimerisiertes und trimerisiertes Hexamethylendiisocyanat, Isophorondiisocyanat, 2-Isocyanatopropylcyclohexylisocyanat, Dicyclohexylmethan-2,4'-diisocyanat, Dicyclohexylmethan-4,4'-diisocyanat oder 1,3-Bis(isocyanatomethyl)cyclohexan (BIC), Diisocyanate, abgeleitet von Dimerfettsäuren, wie sie unter der Handelsbezeichnung DDI 1410 von der Firma Henkel vertrieben werden, 1,8-Diisocyanato-4-isocyanatomethyl-oktan, 1,7-Diisocyanato-4-isocyanatomethylheptan oder 1-Isocyanato-2-(3-isocyanatopropyl)cyclohexan oder Mischungen aus diesen Polyisocyanaten eingesetzt.

Beispiele für geeignete Polyepoxide (B) sind alle bekannten aliphatischen und/oder cycloaliphatischen und/oder aromatischen Polyepoxide, beispielsweise auf Basis Bisphenol-A oder Bisphenol-F. Als Polyepoxide geeignet sind beispielsweise auch die im Handel unter den Bezeichnungen Epikote® der Firma Shell, Denacol® der Firma Nagase Chemicals Ltd., Japan, erhältlichen Polyepoxide, wie z.B. Denacol EX-411 (Pentaerythritpolyglycidylether), Denacol EX-321 (Trimethylolpropanpolyglycidylether), Denacol EX-512 (Polyglycerolpolyglycidylether) und Denacol

EX-521 (Polyglycerolpolyglycidylether).

Im Falle der Einkomponentensysteme werden Vernetzungsmittel (B) verwendet, welche bei höheren Temperaturen mit den funktionellen Gruppen der Bindemittel reagieren, um ein dreidimensionales Netzwerk aufzubauen. Selbstverständlich können solche Vernetzungsmittel (B) in untergeordneten Mengen in den Mehrkomponentensystemen mit verwendet werden. Im Rahmen der vorliegenden Erfindung bedeutet "untergeordnete Menge" einen Anteil, welcher die hauptsächliche Vernetzungsreaktion nicht stört oder gar ganz verhindert.

Beispiele geeigneter Vernetzungsmittel (B) dieser Art sind blockierte Polyisocyanate. Beispiele geeigneter Polyisocyanate sind die vorstehend beschriebenen.

Beispiele für geeignete Blockierungsmittel sind die aus der US-Patentschrift US-A-4,444,954 bekannten Blockierungsmittel wie

i) Phenole wie Phenol, Cresol, Xylenol, Nitrophenol, Chlorophenol, Ethylphenol, t-Butylphenol, Hydroxybenzoesäure, Ester dieser Säure oder 2,5- di-tert.-Butyl-4-hydroxytoluol;

ii) Lactame, wie ε-Caprolactam, δ-Valerolactam, γ-Butyrolactam oder β-Propiolactam;

iii) aktive methylenische Verbindungen, wie Diethylmalonat, Dimethylmalonat, Acetessigsäureethyl- oder -methylester oder Acetylaceton;

iv) Alkohole wie Methanol, Ethanol, n-Propanol, Isopropanol, n-Butanol, Isobutanol, t-Butanol, n-Amylalkohol, t-Amylalkohol, Laurylalkohol, Ethylenglykolmonomethylether, Ethylenglykolmonoethylether, Ethylenmonopropylether, Ethylenglykolmonobutylether, Diethylenglykolmonomethylether, Diethylenglykolmonoethylether, Propylenglykolmonomethylether, Methoxymethanol, Glykolsäure, Glykolsäureester, Milchsäure, Milchsäureester, Methylolharnstoff, Methylolmelamin, Diacetonalkohol, Ethylenchlorohydrin, Ethylenbromhydrin, 1,3-Dichloro-2-propanol, 1,4-Cyclohexyldimethanol oder Acetocyanhydrin;

v) Mercaptane wie Butylmercaptan, Hexylmercaptan, t-Butylmercaptan, t-Dodecylmercaptan, 2-Mercaptobenzothiazol, Thiophenol, Methylthiophenol oder Ethylthiophenol;

vi) Säureamide wie Acetoanilid, Acetoanisidinamid, Acrylamid, Methacrylamid, Essigsäureamid, Stearinsäureamid oder Benzamid;

vii) Imide wie Succinimid, Phthalimid oder Maleimid;

viii) Amine wie Diphenylamin, Phenylnaphthylamin, Xylidin, N-Phenylxylidin, Carbazol, Anilin, Naphthylamin, Butylamin, Dibutylamin oder Butylphenylamin;

ix) Imidazole wie Imidazol oder 2-Ethylimidazol;

x) Harnstoffe wie Harnstoff, Thioharnstoff, Ethylenharnstoff, Ethylenthioharnstoff oder 1,3-Diphenylharnstoff,

xi) Carbamate wie N-Phenylcarbamidsäurephenylester oder 2-Oxazolidon;

xii) Imine wie Ethylenimin;

xiii) Oxime wie Acetonoxim, Formaldoxim, Acetaldoxim, Acetoxim, Methylethylketoxim, Diisobutylketoxim, Diacetylmonoxim, Benzophenonoxim oder Chlorohexanonoxime;

xiv) Salze der schwefeligen Säure wie Natriumbisulfit oder Kaliumbisutfit;

xv) Hydroxamsäureester wie Benzylmethacrylohydroxamat (BMH) oder Allylmethacrylohydroxamat; oder

xvi) substituierte Pyrazole, Ketoxime, Imidazole oder Triazole; sowie Gemische dieser Blockierungsmittel, insbesondere Dimethylpyrazol und Triazole, Malonester und Acetessigsäureester oder Dimethylpyrazol und Succinimid.

Als Vemetzungsmittel (B) können auch Tris(alkoxycarbonylamino)triazine (TACT) der allgemeinen Formel

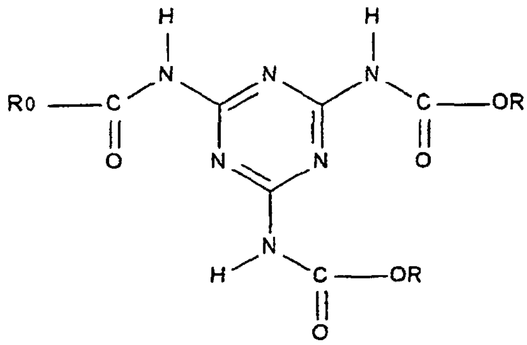

eingesetzt werden.

Beispiele geeigneter Tris(alkoxycarbonylamino)triazine (B) werden in den Patentschriften US-A-4,939,213, US-A-5,084,541 oder EP-A-0 624 577 beschrieben. Insbesondere werden die Tris(methoxy-, Tris(butoxy- und/oder Tris(2-ethylhexoxycarbonylamino)triazine verwendet.

Von Vorteil sind die Methyl-Butyl-Mischester, die Butyl-2-Ethylhexyl-Mischester und die Butylester. Diese haben gegenüber dem reinen Methylester den Vorzug der besseren Löslichkeit in Polymerschmelzen und neigen auch weniger zum Auskristallisieren.

Insbesondere sind Aminoplastharze, beispielsweise Melaminharze, als Vernetzungsmittel (B) verwendbar. Hierbei kann jedes für transparente Decklacke oder Klarlacke geeignete Aminoplastharz oder eine Mischung aus solchen Aminoplastharzen verwendet werden. Insbesondere kommen die üblichen und bekannten Aminoplastharze in Betracht, deren Methylol- und/oder Methoxymethylgruppen z. T. mittels Carbamat- oder Allophanatgruppen defunktionalisiert sind. Vemetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Weitere Beispiele geeigneter Vernetzungsmittel (B) sind beta-Hydroxyalkylamide wie N,N,N',N'-Tetrakis(2-hydroxyethy))adipamid oder N,N,N,N-Tetrakis(2-hydroxypropyl)-adipamid.

Weitere Beispiele geeigneter Vemetzungsmittel (B) sind Siloxane, insbesondere Siloxane mit mindestens einer Trialkoxy- oder Dialkoxysilangruppe.

Weitere Beispiele geeigneter Vernetzungsmittel (B) sind Polyanhydride, insbsondere Polysuccinsäureanhydrid.

Die Menge der Vernetzungsmittel (B) in dem erfindungsgemäßen Beschichtungsstoff kann breit variieren und richtet sich insbesondere zum einen nach der Funktionalität der Vernetzungsmittel (B) und zum anderen nach der Anzahl der im Bindemittel (A) vorhandenen vernetzenden funktionellen Gruppen (a1) sowie nach der Vemetzungsdichte, die man erzielen will. Der Fachmann kann daher die Menge der Vernetzungsmittel (B) aufgrund seines allgemeinen Fachwissens, gegebenenfalls unter Zuhilfenahme einfacher orientierender Versuche ermitteln. Vorteilhafterweise ist das Vemetzungsmittel (B) in dem erfindungsgemäßen Beschichtungsstoff in einer Menge von 5 bis 60 Gew.-%, besonders bevorzugt 10 bis 50 Gew.-% und insbesondere 15 bis 45 Gew.-%, jeweils bezogen auf den Gesamtfeststoffgehalt des erfindungsgemäßen Beschichtungsstoffs, enthalten. Hierbei empfiehlt es sich des weiteren, die Mengen an Vernetzungsmittel (B) und Bindemittel (A) so zu wählen, daß in dem erfindungsgemäßen Beschichtungsstoff das Verhältnis von funktionellen Gruppen (b1) im Vemetzungsmittel (B) und funktionellen Gruppen (a1) im Bindemittel (A) zwischen 2 : 1 bis 1 : 2, vorzugsweise 1,5 : 1 bis 1 : 1,5, besonders bevorzugt 1,2 : 1 bis 1 : 1,2 und insbesondere 1,1 : 1 bis 1 : 1,1 liegt.

Wenn der erfindungsgemäße Beschichtungsstoff nicht nur thermisch sondern auch mit aktinischer Strahlung, insbesondere UV-Strahlung und/oder Elektronenstrahlung, härtbar sein soll (Dual Cure), enthält er mindestens einen Bestandteil (C), welcher mit aktinischer Strahlung härtbar ist.

Als Bestandteile (C) kommen grundsätzlich alle mit aktinischer Strahlung, insbesondere UV-Strahlung und/oder Elektrönenstrahlung, härtbaren oligomeren und polymeren Verbindungen in Betracht, wie sie üblicherweise auf dem Gebiet der UV-härtbaren oder mit Elektronenstrahlung härtbaren Beschichtungsstoffe verwendet werden.

Vorteilhafterweise werden strahlenhärtbare Bindemittel als Bestandteile (C) verwendet Beispiele geeigneter strahlenhärtbarer Bindemittel (C) sind (meth)acrylfunktionelle (Meth)Acrylcopolymere, Polyetheracrylate, Polyesteracrylate, ungesättigte Polyester, Epoxyacrylate, Urethanacrylate, Aminoacrylate, Melaminacrylate, Silikonacrylate und die entsprechenden Methacrylate. Bevorzugt werden Bindemittel (C) eingesetzt, die frei von aromatischen Struktureinheiten sind. Bevorzugt werden daher Urethan(meth)acrylate und/oder Polyester(meth)acrylate, besonders bevorzugt aliphatische Urethanacrylate, eingesetzt.

Der erfindungsgemäße Beschichtungsstoff kann desweiteren mindestens einen Photoinitiator (D) enthalten. Wenn der Beschichtungsstoff bzw. die Klarlackschicht zusätzlich mit UV-Strahlung vemetzt werden soll, ist die Verwendung eines Photoinitiators (B) im allgemeinen notwendig. Sofern er mitverwendet wird, ist er in dem erfindungsgemäßen Beschichtungsstoff bevorzugt in Anteilen von 0,1 bis 10 Gew.-%, besonders bevorzugt 1 bis 8 Gew.-% und insbesondere 2 bis 6 Gew.-%, jeweils bezogen auf den Gesamtfeststoffgehalt des erfindungsgemäßen Beschichtungsstoffs, enthalten.

Beispiele geeigneter Photoinitiatoren (D) sind solche vom Norrish II-Typ, deren Wirkungsmechanismus auf einer intramolekularen Variante der Wasserstoff-Abstraktionsreaktionen beruht, wie sie in vielfältiger Weise bei photochemischen Reaktionen auftreten (beispielhaft sei hier auf Römpp Chemie Lexikon, 9. erweiterte und neubearbeitete Auflage, Georg Thieme Verlag Stuttgart, Bd. 4, 1991, verwiesen) oder kationische Photoinitiatoren (beispielhaft sei hier auf Römpp Lexikon »Lacke und Druckfarben« Georg Thieme Verlag Stuttgart, 1998, Seiten 444 bis 446, verwiesen), insbeondere Benzophenone, Benzoine oder Benzoinether oder Phosphinoxide. Es können auch beispielsweise die im Handel unter den Namen Irgacure® 184, Irgacure® 1800 und Irgacure® 500 der Firma Ciba Geigy, Grenocure ® MBF der Firma Rahn und Lucirin® TPO der Firma BASF AG erhältlichen Produkte eingesetzt werden.

Neben den Photo initiatoren (D) können übliche Sensibilisatoren (D) wie Anthracen in wirksamen Mengen verwendet werden.

Des weiteren kann der Beschichtungsstoff mindestens einen Initiator der thermischen Vemetzung (E) enthalten. Diese bilden ab 80 bis 120 °C Radikale, welche die Vemetzungsreaktion starten. Beispiele für thermolabile radikalische Initiatoren sind organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether. C-C-spaltende Initiatoren sind besonders bevorzugt, da bei ihrer thermischen Spaltung keine gasförmigen Zersetzungprodukte gebildet werden, die zu Störungen in der Lackschicht führen könnten. Sofern sie mit verwendet werden, liegen ihre Mengen im allgemeinen zwischen 0,1 bis 10 Gew.-%, vorzugsweise 0,5 bis 8 Gew.-% und insbesondere 1 bis 5 Gew.-%, jeweils bezogen auf den Gesamtfeststoffgehalt des erfindungsgemäßen Beschichtungsstoffs.

Darüber hinaus kann der Beschichtungsstoff mindestens einen mit aktinischer Strahlung und/oder thermisch härtbaren Reaktivverdünner (F) enthalten.

Beispiele geeigneter thermisch vernetzbarer Reaktiverdünner (F) sind verzweigte, cyclische und/oder acyclische $C_9$-$C_{16}$-Alkane, die mit mindestens zwei Hydroxylgruppen funktionalisiert sind, vorzugsweise Dialkyloctandiole, insbesondere die stellungsisomeren Diethyloctandiole.

Weitere Beispiele geeigneter thermisch vernetzbarer Reaktiverdünner (F) sind oligomere Polyole, welche aus oligomeren Zwischenprodukten, die durch Metathesereaktionen von acyclischen Monoolefinen und cyclischen Monoolefinen gewonnen werden, durch Hydroformylierung und anschließender Hydrierung erhältlich sind; Beispiele geeigneter cyclischer Monoolefine sind Cyclobuten, Cyclopenten, Cyclohexen, Cycloocten, Cyclohepten, Norbonen oder 7-Oxanorbonen; Beispiele geeigneter acyclischer Monoolefine sind in Kohlenwasserstöffgemischen enthalten, die in der Erdölverarbeitung durch Cracken erhalten werden ($C_5$-Schnitt); Beispiele geeigneter, erfindungsgemäß zu verwendender oligomerer Polyole weisen eine Hydroxylzahl (OHZ) von 200 bis 450, ein zahlenmittleres Molekulargewicht Mn von 400 bis 1000 und ein massenmittleres Molekulargewicht Mw von 600 bis 1100 auf

Weitere Beispiele geeigneter thermisch vemetzbarer Reaktiverdünner (F) sind hyperverzweigte Verbindungen mit einer tetrafunktionellen Zentralgruppe, abgeleitet von Ditrimethylolpropan, Diglycerin, Ditrimethylolethan, Pentaerythrit, Tetrakis(2-hydroxyethyl)methan, Tetrakis(3-hydroxypropyl)methan oder 2,2-Bis-hydroxymethyl-butandiol-(1,4) (Homopentaerythrit). Die Herstellung dieser Reaktivverdünner kann nach den üblichen und bekannten Methoden der Herstellung hyperverzweigter und dendrimerer Verbindungen erfolgen. Geeignete Synthesemethoden werden beispielsweise in den Patentschriften WO 93/17060 oder WO 96/12754 oder in dem Buch von G. R Newkome, C. N. Moorefield und F. Vögtle, "Dendritic Molecules, Concepts, Syntheses, Perspectives", VCH, Weinheim, New York, 1996, beschrieben.

Weitere Beispiele geeigneter Reaktivverdünner (F) sind Polycarbonatdiole, Polyesterpolyole, Poly(meth)acrylatdiole oder hydroxylgruppenhaltige Polyadditionsprodukte.

Beispiele geeigneter reaktiver Lösemittel, welche als Reaktiverdünner (F) verwendet werden können, sind Butylglykol, 2-Methoxypropanol, n-Butanol, Methoxybutanol, n-Propanol, Ethylenglykolmonomethylether, Ethylenglykolmonoethylether, Ethylenglykolmonobutylether, Diethylenglykolmonomethylether, Diethylenglykolmonoethyl-ether, Diethylenglykoldiethylether, Diethylenglykohnonobutylether, Trimethylolpropan, 2-Hydroxypropionsäureethylester oder 3-Methyl-3-methoxybutanol sowie Derivate auf Basis von Propylenglykol, z.B. Isopropoxypropanol, genannt.

Als Reaktivverdünner (F), welche mit aktinischer Strahlung vemetzt werden können, werden beispielsweise die vorstehenden Detail beschriebenen erfindungsgemäß zu verwendenden Polysilaxanmakromonomeren, (Meth) Acrylsäure und deren sonstigen Ester, Maleinsäure und deren Ester bzw. Halbester, Vinylacetat, Vinylether, Vinylharnstoffe u.ä. eingesetzt. Als Beispiele seien Alkylenglykoldi(meth)acrylat, Polyethylenglykoldi(meth)acrylat, 1,3-Butandioldi(meth)acrylat, Vinyl(meth)acrylat, Allyl(meth)acrylat, Glycerin-tri(meth)acrylat, Trimethylolpropantri(meth)acrylat, Trimethylolpropandi(meth)acrylat, Tripropylenglykoldiacrylat, Styrol, Vinyltoluol, Divinylbenzol, Pentaerythrittri(meth) acrylat, Pentaerythrittetra(meth)acrylat, Dipropyienglykoldi(meth)acrylat, Hexandioldi(meth)acrylat, Ethoxyethoxyethylacrylat, N-Vinylpyrrolidon, Phenoxyethylacrylat, Dimethylaminoethylacrylat, Hydroxyethyl(meth)acrylat, Butoxyethylacrylat, Isobomyl(meth)acrylat, Dimethylacrylamid und Dicyclopentylacrylat, die in der EP-A-0 250 631 beschriebenen, langkettigen linearen Diacrylate mit einem Molekulargewicht von 400 bis 4000, bevorzugt von 600 bis 2500. Beispielsweise können die beiden Acrylatgruppen durch eine Polyoxibutylenstruktur getrennt sein. Einsetzbar sind außerdem 1,12-Dodecyldiacrylat und das Umsetzungsprodukt von 2 Molen Acrylsäure mit einem Mol eines Dimerfettalkohols, der im allgemeinen 36 C-Atome aufweist Geeignet sind auch Gemische der genannten Monomeren.

Bevorzugt werden als Reaktivverdünner (F) Mono- und/oder Diacrylate, wie z.B. Isobornylacrylat, Hexandioldiacrylat, Tripropylenglykoldiacrylat, Laromer® 8887 der Firma BASF AG und Actilane® 423 der Firma Akcros Chemicals Ltd., GB, eingesetzt. Besonders bevorzugt werden Isobomylacrylat, Hexandioldiacrylat und Tripropylenglykoldiacrylat eingesetzt.

Sofern sie mit verwendet werden, werden die Reaktivverdünner (F) in einer Menge von vorzugsweise 2 bis 70 Gew.-%, besonders bevorzugt 10 bis 65 Gew.-% und insbesondere 15 bis 50 Gew.-%, jeweils bezogen auf den Gesamtfeststoffgehalt des erfindungsgemäßen Beschichtungsstoffs, angewandt.

Darüber hinaus kann der Beschichtungsstoff mindestens ein übliches und bekanntes Lackadditiv (G) in wirksamen Mengen, d.h. in Mengen vorzugsweise bis zu 40 Gew.-%, besonders bevorzugt bis zu 30 Gew.-% und insbesondere bis zu 20 Gew.-%, jeweils bezogen auf den Gesamtfeststoffgehalt des Beschichtungsstoffs, enthalten. Wesentlich ist, daß die Lackadditive (G) die Transparenz und Klarheit des erfindungsgemäßen Beschichtungsstoffs nicht negativ beeinflussen.

Beispiele geeigneter Lackadditive (G) sind

- UV-Absorber;
- Lichtschutzmittel wie HALS-Verbindungen, Benztriazole oder Oxalanilide;
- Radikalfänger;
- Katalysatoren für die Vernetzung wie Dibutylzinndilaurat oder Lithiumdecanoat;
- Slipadditive;
- Polymerisationsinhibitoren;
- Entschäumer;
- Emulgatoren, insbesondere nicht ionische Emulgatoren wie alkoxylierte Alkanole und Polyole, Phenole und Alkylphenole oder anionische Emulgatoren wie Alkalisalze oder Ammoniumsalze von Alkancarbonsäuren, Alkansulfonsäuren, und Sulfosäuren von alkoxylierten Alkanolen und Polyolen, Phenolen und Alkylphenolen;
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- transparente Füllstoffe; hierzu wird auf das Römpp Lexikon »Lacke und Druckfarben« Georg Thieme Verlag, Stuttgart, 1998, Seiten 250 bis 252, verwiesen;
- Sag control agents wie Harnstoffe, modifizierte Harnstoffe und/oder Kieselsäuren, wie sie beispielsweise in den Literaturstellen EP-A-192 304, DE-A-23 59 923, DE-A-18 05 693, WO 94/22968, DE-C-27 51 761, WO 97/12945 oder "farbe + lack", 11/1992, Seiten 829 ff., beschrieben werden;
- Rheologiesteuemder Additive wie die aus den Patentschriften WO 94/22968, EP-A-0 276 501, EP-A-0 249 201

oder WO 97/12945 bekannten; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäureanhydrid-Copolymere und ihre Derivate oder hydrophob modifizierte ethoxylierte Urethane oder Polyacrylate;

- Flammschutzmittel und/oder
- Mattierungsmittel.

Weitere Beispiele geeigneter Lackadditive (G) werden in dem Lehrbuch »Lackadditive« von Johan Bieleman, Wiley-VCH, Weinheim, New York, 1998, beschrieben.

Im Falle von nichtwäßrigen erfindungsgemäßen Beschichtungsstoffen können diese 20 bis 70 Gew.-%, vorzugsweise 40 bis 60 Gew.-%, (bezogen auf den applikationsfertigen Beschichtungsstoff) organische Lösungsmittel (H) enthalten, wie z.B. aliphatische, aromatische und/oder cycloaliphatische Kohlenwasserstoffe, Alkylester der Essigsäure oder Propionsäure, Alkanole, Ketone, Glykolether und/oder Glykoletherester.

Der erfindungsgemäße Beschichtungsstoff kann in unterschiedlichen Formen vorliegen.

So kann er bei entsprechender Wahl seiner vorstehend beschriebenen Bestandteile (A) und (B) sowie gegebenenfalls (C), (D), (E), (F), (G) und/oder (H) als flüssiger Beschichtungsstoff vorliegen, welcher im wesentlichen frei von organischen Lösemitteln und/oder Wasser ist (100%-System).

Indes kann es sich bei dem Beschichtungsstoff um eine Lösung oder Dispersion der vorstehend beschriebenen Bestandteile in organischen Lösemitteln (H) und/oder Wasser handeln. Es ist ein weiterer Vorteil des erfindungsgemäßen Beschichtungsstoffs, daß hierbei Feststoffgehalte bis zu mehr als 80 Gew.-%, bezogen auf den Beschichtungsstoff, eingestellt werden können.

Des weiteren kann der erfindungsgemäße Beschichtungsstoff bei entsprechender Wahl seiner vorstehend beschriebenen Bestandteile ein Pulverklarlack sein. Zu diesem Zweck kann der Bestandteil (B) mikroverkapselt sein, wenn es sich um ein Polyisocyanat handelt. Dieser Pulverklarlack kann dann gegebenenfalls in Wasser dispergiert werden, wodurch ein Pulversluny-Klarlack resultiert.

Der erfindungsgemäße Beschichtungsstoff kann ein Zwei- oder Mehrkomponentensystem sein, bei dem zumindest der Bestandteil (B) getrennt von den übrigen Bestandteilen gelagert und erst kurz vor der Verwendung zu diesen hinzugegeben wird. In diesem Falle kann der erfindungsgemäße Beschichtungsstoff auch wäßrig sein, wobei der Bestandteil (B) vorzugsweise in einer ein Lösemittel (H) enthaltenden Komponente vorliegt.

Des weiteren kann der erfindungsgemäße Beschichtungsstoff Bestandteil eines sogenannten Mischsystems oder Modulsystems sein, wie sie beispielsweise in den Patentschriftten DE-A-41 10 520, EP-A-0 608 773, EP-A-0 614 951 oder EP-A-0 471 972 beschrieben werden.

Die Herstellung des erfindungsgemäßen Beschichtungsstoffs aus seinen Bestandteilen (A) und (B) sowie gegebenenfalls (C), (D), (E), (F), (G) und/oder (H) weist keine Besonderheiten auf, sondern erfolgt in üblicher und bekannter Weise durch Vermischen der Bestandteile in geeigneten Mischaggregaten wie Rührkessel, Dissolver oder Extruder nach den für die Herstellung der jeweiligen Beschichtungsstoffe geeigneten Verfahren, wie sie beispielsweise in den eingangs aufgeführten Patentschriften beschrieben werden.

Der erfindungsgemäße Beschichtungsstoff dient der Herstellung der erfindungsgemäßen Klarlackierungen KL und Mehrschichtlackierungen ML auf grundierten oder ungrundierten Substraten.

Als Substrate kommen alle zu lackierenden Oberflächen, die durch eine Härtung der hierauf befindlichen Lackierungen unter Anwendung von Hitze und gegebenenfalls aktinischer Strahlung nicht geschädigt werden, in Betracht, das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel: Demnach ist die erfindungsgemäße Klarlackierung KL auch für Anwendungen außerhalb der Automobillackierung geeignet, insbesondere für die Lackierung von Möbeln und die industrielle Lackierung, inklusive Coil Coating und Container Coating. Im Rahmen der industriellen Lackierungen eignet sie sich für die Lackierung praktisch aller Teile für den privaten oder industriellen Gebrauch wie Radiatoren, Haushaltsgeräte, Kleinteile aus Metall, Radkappen oder Felgen. Insbesondere ist die erfindungsgemäße Klarlackierung KL als Überzug von Basislacken geeignet, vorzugsweise in der Automobilindustrie. Besonders geeignet ist sie als Klarlackierung über Wasserbasislacken auf Basis von Polyestern, Polyurethanharzen und Aminoplastharzen, insbesondere im Rahmen der erfindungsgemäßen Mehrschichtlackierung ML.

Mit der erfindungsgemäßen Klarlackierung KL oder der erfindungsgemäßen Mehrschichtlackierung ML können insbesondere auch grundierte oder nicht grundierte Kunststoffe wie z. B. ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert werden.

Die zu lackierenden Kunststoffe können selbstverständlich auch Polymerblends, modifizierte Kunststoffe oder faserverstärkte Kunststoffe sein. Es können auch die üblicherweise im Fahrzeugbau, insbesondere Kraftfahrzeugbau, eingesetzten Kunststoffe zum Einsatz kommen.

Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen werden.

Die erfindungsgemäße Klarlackierung KL ist herstellbar, indem man in einem ersten Verfahrensschritt mindestens eine Klarlackschicht I aus einem mit aktinischer Strahlung und/oder thermisch härtbaren Beschichtungsstoff I auf die Oberfläche des Substrats appliziert.

Somit kann im Rahmen der vorliegenden Erfindung lediglich eine Klarlackschicht I aus dem Beschichtungsstoff I aufgetragen werden. Es können jedoch zwei oder mehr solcher Klarlackschichten I appliziert werden. Hierbei können jeweils unterschiedliche Beschichtungsstoffe I für den Aufbau der Klarlackschichten I angewandt werden. In den allermeisten Fällen wird indes das angestrebte Eigenschaftsprofil der erfindungsgemäßen Klarlackierung KL mit einer Klarlackschicht I erzielt.

Die Klarlackschicht I wird in einer Naßschichtdicke aufgetragen, daß nach der Aushärtung in der fertigen erfindungsgemäßen Klarlackierung KL eine Trockenschichtdicke von 10 bis 100, vorzugsweise 15 bis 75, besonders bevorzugt 20 bis 55 und insbesondere 20 bis 35µm resultiert.

Die Applikation des Beschichtungsstoffs I zum Zwecke der Herstellung der Klarlackschicht I kann durch alle üblichen Applikationsmethoden, wie z.B. Spritzen, Rakeln, Streichen, Gießen, Tauchen oder Walzen erfolgen. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikationen kann bei Temperaturen von max. 70 bis 80 °Celsius durchgeführt werden, so daß geeignete Applikationsviskositäten erreicht werden, ohne daß bei der kurzzeitig einwirkenden thermischen Belastung eine Veränderung oder Schädigungen des Beschichtungsstoffs I und seines gegebenenfalls wiederaufzubereitenden Overspray eintreten. So kann das Heißspritzen so ausgestaltet sein, daß der Beschichtungsstoff I nur sehr kurz in der oder kurz vor der Spritzdüse erhitzt wird.

Die für die Applikation verwendete Spritzkabine kann beispielsweise mit einem gegebenenfalls temperierbaren Umlauf betrieben werden, der mit einem geeigneten Absorptionsmedium für den Overspray, z. B. dem Beschichtungsstoff I selbst, betrieben wird.

Sofern der Beschichtungsstoff I auch mit aktinischer Strahlung härtbar ist, wird die Applikation bei Beleuchtung mit sichtbarem Licht einer Wellenlänge von über 550 nm oder unter Lichtausschluß durchgeführt Hierdurch werden eine stoffliche Änderung oder Schädigung des Beschichtungsstoffs I und des Overspray vermieden.

Selbstverständlich können die vorstehend beschriebenen Applikationsmethoden auch bei der Herstellung der Klarlackschicht II oder der Basislackschicht III sowie gegebenenfalls weiterer Lackschichten im Rahmen der erfindungsgemäßen KL- und ML-Verfahren angewandt werden.

Erfindungsgemäß wird die Klarlackschicht 1 nach ihrer Applikation partiell oder vollständig ausgehärtet.

Methodisch gesehen unterscheidet sich die partielle Aushärtung nicht von einer üblicherweise erfolgenden vollständigen Aushärtung einer Lackschicht. Es wird hierbei lediglich so lange vemetzt, daß die Klarlackschicht I einerseits eine für die Zwecke der erfindungsgemäßen KL - oder ML-Verfahren ausreichende Dimensionsstabilität und andererseits genügend der vorstehend beschriebenen vemetzungsfähigen funktionellen Gruppen (a1) und (b2) (komplementäre funktionelle Gruppen) für die Nachvemetzung und für die Zwischenschichthaftung aufweist Das Ausmaß der partiellen Aushärtung kann daher breit variieren und richtet sich nach den Erfordernissen des jeweiligen Einzelfalls. Es kann indes vom Fachmann aufgrund seines allgemeinen Fachwissens und/oder anhand einfacher Vorversuche ermittelt werden. Vorzugsweise werden 0,5 bis 99,5, besonders bevorzugt 1 bis 99, ganz besonders bevorzugt 2 bis 90 und insbesondere 3 bis 80 Mol-% der in dem Beschichtungsstoff I vorhandenen vernetzungsfähigen funktionellen Gruppen umgesetzt. Ganz besonders bevorzugt ist es, wenn die Klarlackschicht I nach ihrer partiellen Aushärtung noch klebrig ist.

Die Klarlackschicht(en) I kann oder können indes auch vollständig ausgehärtet werden. Anschließend kann die äußere Oberfläche der Klarlackschicht(en) I vor der Applikation der Klarlackschicht II zur Verbesserung der Zwischenschichthaftung aufgerauht oder angeschliffen werden. Hierbei kommen die üblichen und bekannten Aufrauhmethoden wie Schleifen mit Sandpapier oder Stahlwolle oder Feilen oder Bürsten in Betracht. Indes ist es ein besonderer Vorteil der erfindungsgemäßen KL- und ML-Verfahren, daß ein Anschleifen der Klarlackschicht I im allgemeinen nicht notwendig ist.

Erfindungsgemäß kann die Klarlackschicht I thermisch oder mit aktinischer Strahlung und thermisch partiell oder vollständig ausgehärtet werden.

Die Aushärtung kann nach einer gewissen Ruhezeit erfolgen. Sie kann eine Dauer von 30 s bis 2 h, vorzugsweise 1 min bis 1 h und insbesondere 1 min bis 30 min haben. Die Ruhezeit dient beispielsweise zum Verlauf und zur Entgasung der Klarlackschicht I oder zum Verdunsten von flüchtigen Bestandteilen wie Lösemittel, Wasser oder Kohlendioxid, wenn der Beschichtungsstoff I mit überkritischem Kohlendioxid als Lösemittel appliziert worden ist. Die Ruhezeit kann durch die Anwendung erhöhter Temperaturen bis 80 °Celsius unterstützt und/oder verkürzt werden, sofern hierbei keine Schädigungen oder Veränderungen der Klarlackschicht I eintreten, etwa eine vorzeitige vollständige Vernetzung.

Die obligatorische thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung stufenweise erfolgen. Vorteilhafterweise erfolgt die thermische Härtung bei einer Temperatur von 50 bis 100 °C, besonders bevorzugt 80 bis 100 °C und insbesondere 90 bis 100 ° C während einer Zeit von 1 min bis zu 2 h, besonders bevorzugt 2 min bis zu 1 h und insbesondere 3 min bis 30 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 140 °C nicht zu überschreiten.

Sofern angewandt, erfolgt die Aushärtung mit aktinischer Strahlung mit UV-Strahlung oder Elektronenstrahlen. Gegebenenfalls kann sie mit aktinischer Strahlung von anderen Strahlenquellen durchgeführt oder ergänzt werden. Im Falle von Elektronenstrahlen wird vorzugsweise unter Inertgasatmosphäre gearbeitet. Dies kann beispielsweise durch Zufuhren von Kohlendioxid und/oder Stickstoff direkt an die Oberfläche der Klarlackschicht I gewährleistet werden.

Auch im Falle der Härtung mit UV-Strahlung kann, um die Bildung von Ozon zu vermeiden, unter Inertgas gearbeitet werden.

Für die Härtung mit aktinischer Strahlung werden die üblichen und bekannten Strahlenquellen und optischen Hilfsmaßnahmen angewandt Beispiele geeigneter Strahlenquellen sind Quecksilberhoch- oder -niederdruckdampflampen, welche gegebenenfalls mit Blei dotiert sind, um ein Strahlenfenster bis zu 405 nm zu öffnen, oder Elektronenstrahlquellen. Deren Anordnung ist im Prinzip bekannt und kann den Gegebenheiten des Werkstücks und der Verfahrensparameter angepaßt werden. Bei kompliziert geformten Werkstücken wie Automobilkarosserien können die nicht direkter Strahlung zugänglichen Bereiche (Schatten bereiche) wie Hohlräume, Falzen und anderen konstruktionsbedingte Hinterschneidungen mit Punkt-, Kleinflächen- oder Rundumstrahlern verbunden mit einer automatischen Bewegungseinrichtung für das Bestrahlen von Hohlräumen oder Kanten (partiell) ausgehärtet werden.

Die Anlagen und Bedingungen dieser Härtungsmethoden werden beispielsweise in R Holmes, U.V. and E.B. Curing Formulations for Printing Inks, Coatings and Paints, SITA Technology, Academic Press, London, United Kindom 1984, beschrieben.

Hierbei kann die (partielle) Aushärtung stufenweise erfolgen, d. h. durch mehrfache Belichtung oder Bestrahlung mit aktinischer Strahlung. Dies kann auch alternierend erfolgen, d. h., daß abwechselnd mit UV-Strahlung und Elektronenstrahlung gehärtet wird.

Werden die thermische Härtung und Härtung mit aktinischer Strahlung zusammen angewandt, können diese Methoden gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist, aufgrund seines allgemeinen Fachwissens gegebenenfalls unter Zuhilfenahme einfacher Vorversuche ermitteln.

Selbstverständlich können die vorstehend beschriebenen Härtungsmethoden auch bei der Herstellung der Klarlackschicht II oder der Basislackschicht III sowie gegebenenfalls weiterer Lackschichten im Rahmen der erfindungsgemäßen KL- oder ML-Verfahren angewandt werden.

In erfindungsgemäßer Verfahrensweise wird eine weitere Klarlackschicht II aus einem thermisch sowie gegebenenfalls mit aktinischer Strahlung härtbaren Beschichtungsstoff II auf die Oberfläche der Klarlackschicht(en) I appliziert, wonach man - wenn die Klarlackschicht I partiell ausgehärtet wurde - die Klarlackschichten I und II gemeinsam oder - wenn die Klarlackschicht I vollständig ausgehärtet wurde - die Klarlackschicht II alleine thermisch sowie gegebenenfalls mit aktinischer Strahlung aushärtet, wobei auch hier die vorstehend beschriebenen Methoden und Vorrichtungen zur Anwendung kommen.

Erfindungsgemäß handelt es sich bei dem Beschichtungsstoff I zur Herstellung der Klarlackschicht I um den erfindungsgemäßen Beschichtungsstoff. In diesem Falle kann der Beschichtungsstoff II zur Herstellung der Klarlackschicht II ein üblicher und bekannter Beschichtungsstoff sein, wie er in den eingangs aufgeführten Patentschriften beschrieben wird. Indes kann es sich auch bei dem Beschichtungsstoff II um einen erfindungsgemäßen Beschichtungsstoff handeln.

Bei dieser Variante der erfindungsgemäßen Klarlackierung KL und des erfindungsgemäßen KL-Verfahrens, bei welcher der Beschichtungsstoff 1 der erfindungsgemäßen Beschichtungsstoff und der Beschichtungsstoff II ein üblicher und bekannter Beschichtungsstoff ist, ergeben sich besondere Vorteile hinsichtlich der Zwischenschichthaftung und der Haftung zum Substrat.

Wird bei dieser Variante der erfindungsgemäßen Klarlackierung KL und des erfindungsgemäßen KL-Verfahrens als Beschichtungsstoff II ebenfalls der erfindungsgemäßen Beschichtungsstoff II verwendet, ergeben sich zusätzlich ganz besondere Vorteile hinsichtlich der Witterungsbeständigkeit und Kratzfestigkeit.

Die Klarlackschicht II wird in einer Naßschichtdicke aufgetragen, daß nach der Aushärtung in der fertigen erfindungsgemäßen Klarlackierung KL eine Trockenschichtdicke von 10 bis 100, vorzugsweise 15 bis 75, besonders bevorzugt 20 bis 55 und insbesondere 20 bis 35µm resultiert.

In den allermeisten Fällen ist es indes für eine hervorragende Zwischenschichthaftung, Witterungsbeständigkeit und Kratzfestigkeit völlig ausreichend, wenn lediglich die Klarlackschicht II aus einem erfindungsgemäßen Beschichtungsstoff II hergestellt wird und für die Herstellung der Klarlackschicht I ein herkömmlicher Beschichtungsstoff verwendet wird (zweite Variante der erfindungsgemäßen Klarlackierung KL und des erfindungsgemäßen KL-Verfahrens). Deswegen wird dieser Variante allein schon aus wirtschaftlichen Gründen auch häufig der Vorzug gegeben.

Das Verhältnis der Schichtdicken von Klarlackschicht I zu Klarlackschicht II kann breit variieren, indes ist es insbesondere bei der zweiten Variante auch aus wirtschaftlichen Gründen von Vorteil, wenn die Klarlackschicht I die dickere der beiden Schichten ist.

Die vorstehend beschriebenen erfindungsgemäßen Klarlackierungen KL, welche vorzugsweise mit Hilfe des erfindungsgemäßen KL-Verfahrens hergestellt werden, können auch Bestandteil der erfindungsgemäßen Mehrschichtlackierungen ML sein. Vorteilhafterweise werden diese mit Hilfe des erfindungsgemäßen ML-Verfahrens hergestellt.

Zu diesem Zweck wird oder werden die Klarlackschicht(en) I im ersten Verfahrensschritt nicht auf die grundierten oder ungrundierten Substrate, sondern auf mindestens eine hierauf befindliche farb- und/oder effektgebende Basislackschicht III aus einem thermisch sowie gegebenenfalls mit aktinischer Strahlung härtbaren pigmentierten Beschichtungsstoff III appliziert.

Erfindungsgemäß ist es von Vorteil, die Klarlackschicht(en) I nach dem Naß-in-naß-Verfahren auf die getrocknete oder abgelüftete, indes nicht ausgehärtete Basislackschicht III aufzutragen und entweder für sich alleine partiell, gemeinsam mit der Basislackschicht III partiell oder gemeinsam mit der Basislackschicht III thermisch und gegebenenfalls mit aktinischer Strahlung vollständig auszuhärten. Erfolgt eine vollständige Aushärtung, kann die äußere Oberfläche der Klarlackschicht(en) I vor der Applikation der Klarlackschicht II wie vorstehend beschrieben angeschliffen werden.

Hiernach wird erfindungsgemäß eine weitere Klarlackschicht II aus einem thermisch sowie gegebenenfalls mit aktinischer Strahlung härtbaren Beschichtungsstoff II auf die Oberfläche der Klarlackschicht(en) I appliziert, wonach man - wenn die darunter liegenden Lackschichten noch nicht vollständig ausgehärtet wurden - die Klarlackschichten I und II sowie die Basislackschicht III gemeinsam oder - wenn diese Lackschichten bereits vollständig ausgehärtet wurden - die Klarlackschicht II alleine thermisch sowie gegebenenfalls mit aktinischer Strahlung aushärtet.

Hierbei können die vorstehend beschriebenen Applikations- und Härtungsmethoden und -vorrichtungen zur Anwendung kommen.

Wie vorstehend bei der erfindungsgemäßen Klarlackierung KL und dem erfindungsgemäßen KL-Verfahren beschrieben, kann auch bei der erfindungsgemäßen Mehrschichtlackierung ML und dem erfindungsgemäßen ML-Verfahren der Beschichtungsstoff II und/oder der Beschichtungsstoff I, insbesondere aber der Beschichtungsstoff II, ein erfindungsgemäßer Beschichtungsstoff sein.

Als Beschichtungsstoff III für die Herstellung der Basislackschicht III kommen die üblichen und bekannten Basislacke, insbesondere Wasserbasislacke, in Betracht, wie sie in den eingangs aufgeführten Patentschriften beschrieben werden. Vorteilhafterweise werden die Beschichtungsstoffe III in einer Naßschichtdicke appliziert, daß die Basislackschichten III nach ihrer vollständigen Aushärtung vorteilhafterweise eine Trockenschichtdicke von 5 bis 25 µm, besonders bevorzugt 10 bis 20 µm und insbesondere 12 bis 18 µm aufweisen.

Es kann indes auch der aus der europäischen Patentschrift EP-A-0 844 286 bekannte pigmentierte Pulverlack, welcher thermisch und mit aktinischer Strahlung härtbar ist, verwendet werden. Er enthält ein ungesättigtes Bindemittel und ein zweites hiermit copolymerisierbares Harz sowie einen Photoinitiator und einen thermischen Initiator und ist somit thermisch und mit aktinischer Strahlung härtbar. Die Pulverbasislackschicht kann an der Oberfläche mit UV-Licht und in den substratnahen Bereichen thermisch gehärtet werden.

Die erfindungsgemäße Klarlackierung KL weist hervorragende optische, mechanische und chemische Eigenschaften auf So ist sie frei von jeglichen Oberflächenstörungen wie Schrumpf (wrinkling). Sie ist von hervorragender Transparenz und Kratzfestigkeit. Delamination wegen mangelhafter Zwischenschichthaftung ist nicht zu beobachten. Die Etchbeständigkeit ist hervorragend. Somit eignet sich der erfindungsgemäß zu verwendende Beschichtungsstoff in hervorragender Weise dazu, sämtliche herkömmlichen Klarlackierungen zu veredeln, ohne daß beim Kunden größere Umstellungen der Lackieranlagen notwendig werden. Dies stellt einen weiteren besonderen Vorteil der erfindungsgemäßen Mehrschichtlackierungen ML dar. Letztere weisen insbesondere eine hervorragende Brillianz der Farben und/oder eine hervorragende Ausprägung der optischen Effekte wie Metallic-, Perlglanz- oder Flop-Effekte auf.

**Beispiele und Vergleichsversuche**

**Herstellbeispiele 1 bis 6**

**1. Die Herstellung eines erfindungsgemäß verwendbaren Polyacrylats (A)**

In einem Laborreaktor mit einem Nutzvolumen von 4 1, ausgestattet mit einem Rührer, zwei Tropftrichtern für die Monomermischung resp. Initiatorlösung, Stickstoffeinleitungsrohr, Thermometer und Rückflußkühler, wurden 640,6 g einer Fraktion aromatischer Kohlenwasserstoffe mit einem Siedebereich von 158 - 172°C eingewogen. Das Lösemittel wurde auf 140 °C aufgeheizt Nach Erreichen von 140 °C wurden eine Monomermischung aus 597 g Ethylhexylacrylat, 173,2 g Hydroxyethylmethacrylat, 128,4 g Styrol, 385,2 g 4-Hydroxybutylacrylat und 3,2 g eines hexaacrylatfunktionellen Polysiloxanmakromonomeren (Methylsiloxanharz Tego® LA-S 517 der Firma Tego Chemie Service GmbH; Wirkstoffgehalt: 60 Gew.-%) innerhalb von 4 Stunden und eine Initiatorlösung von 25,6 g t-Butylperethylhexanoat in 50 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden bei 140 °C gehalten und danach abgekühlt Die resultierende Polymerlösung hatte einen Feststoffgehalt von 65%, bestimmt in einem- Umluftofen 1 h bei 130 °C.

**2. Die Herstellung eines herkömmlichen Polyacrylats (A)**

Herstellbeispiel 1 wurde wiederholt, nur daß kein erfindungsgemäß zu verwendendes Polysiloxanmakromonomer eingesetzt wurde.

**3. Die Herstellung eines Polyacrylats als Reibharz**

In einem Laborreaktor mit einem Nutzvolumen von 4 l, ausgestattet mit einem Rührer, zwei Tropftrichtern für die Monomermischung resp. Initiatorlösung, Stickstoffeinleitungsrohr, Thermometer und Rückflußkühler, wurden 720 g einer Fraktion aromatischer Kohlenwasserstoffe mit einem Siedebereich von 158 - 172 °C eingewogen. Das Lösemittel wurde auf 140 °C aufgeheizt. Nach Erreichen von 140 °C wurden eine Monomermischung aus 450 g 2-Ethylhexylmethacrylat, 180 g n-Butylmethacrylat, 210 g Styrol, 180 g Hydroxiethylacrylat, 450 g 4-Hydroxibutylacrylat und 30 g Acrylsäure innerhalb von 4 Stunden und eine Initiatorlösung von 150 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt Die resultierende Polymerlösung hatte einen Feststoffgehalt von 65%, bestimmt in einem Umluftofen 1 h bei 130 °C, eine Säurezahl von 15 und eine Viskosität von 3 dPas (gemessen an einer 60%igen Anlösung der Polymerlösung in dem beschriebenen aromatischen Lösemittel unter Verwendung eines ICI Platte-Kegel Viskosimeters bei 23 °C).

**4. Die Herstellung einer Thixotropierpaste**

In einer Laborrührwerksmühle der Firma Vollrath werden 800 g Mahlgut, bestehend aus 323.2 g des Polyacrylats gemäß Herstellbeispiel 3, 187.2 g Butanol, 200.8 g Xylol und 88.8 g Aerosil® 812 (Degussa AG, Hanau), zusammen mit 1100 g Quarzsand (Korngröße 0.7 - 1 mm) eingewogen und unter Wasserkühlung 30 Minuten angerieben.

**5. Die Herstellung eines Vernetzungsmittels (B)**

In einem 41 - Edelstahlreaktor wurden 40 Gewichtsteile Basonat® HI 190 B/S (Isocyanurat auf der Basis von Hexamethylendiisocyanat der Firma BASF Aktiengesellschaft) und 16,4 Gewichtsteile Solventnaphtha eingewogen und auf 50°C erhitzt. Innerhalb von vier Stunden wurden 26,27 Gewichtsteile Diethylmalonat, 6,5 Gewichtsteile Acetessigsäureethylester und 0,3 Gewichtsteile Katalysatorlösung (Natriumethylhexanoat) gleichmäßig zudosiert. Im Anschluß daran wurde die Temperatur auf 70°C erhöht. Bei Erreichen eines Isocyanat-Äquivalentgewichts von 5.900 bis 6.800 wurden 1,03 Gewichtsteile 1,4-Cyclohexyldimethanol während 30 Minuten bei 70°C unter Rühren zugegeben. Nach Erreichen eines Isocyanat-Äquivalentgewichts von ≥ 13.000 wurden 5 Gewichtsteile n-Butanol zugegeben. Die Temperatur wurde dabei auf 50°C gesenkt, und das resultierende blockierte Polyisocyanat mit n-Butanol auf einen theoretischen Festkörpergehalt von 68 Gew.-% angelöst.

### 6. Die Herstellung eines weiteren herkömmlichen Polyacrylat (A)

In einem Laborreaktor mit einem Nutzvolumen von 4 l, ausgestattet mit einem Rührer, zwei Tropftrichtem für die Monomermischung resp. Initiatorlösung, Stickstoffeinleitungsrohr, Thermometer und Rückflußkühler, wurden 720 g einer Fraktion aromatischer Kohlenwasserstoffe mit einem Siedebereich von 158 - 172 °C eingewogen. Das Lösemittel wurde auf 140 °C aufgeheizt Nach Erreichen von 140 °C wurden eine Monomermischung aus, 427,5 g n-Butylacrylat, 180 g n-Butylmethacrylat, 450 g Styrol, 255 g Hydroxyethylacrylat, 165 g 4-Hydroxybutylacrylat und 22,5 g Acrylsäure innerhalb von 4 Stunden und eine Initiatorlösung von 120 g t-Butylperethylhexanoat in 90 g des beschriebenen aromatischen Lösemittels innerhalb von 4,5 Stunden gleichmäßig in den Reaktor dosiert. Mit der Dosierung der Monomermischung und der Initiatoranlösung wurde gleichzeitig begonnen. Nach Beendigung der Initiatordosierung wurde die Reaktionsmischung zwei weitere Stunden auf 140 °C gehalten und danach abgekühlt. Die resultierende Polymerlösung hatte einen Feststoffgehalt von 60%, bestimmt in einem Umluftofen 1 h bei 130 °C, eine Säurezahl von 13 mg KOH/g, eine OH-Zahl von 116 mg KOH/g, eine Glasübergangstemperatur Tg von 3,23 °C und eine Viskosität von 9 dPas (gemessen an der 60%igen Polymerlösung in dem beschriebenen aromatischen Lösemittel unter Verwendung eines ICI Platte-Kegel Viskosimeters bei 23 °C).

### Beispiel 1 und Vergleichsversuch V1

### Die Herstellung eines erfindungsgemäßen Einkomponentenklarlacks (Beispiel 1) und eines nicht erfindungsgemäßen Einkomponentenklarlacks (Vergleichsversuch V1)

Ein erfindungsgemäßer Einkomponentenklarlack (Beispiel 1) und ein herkömmlicher Einkomponentenklarlack (Vergleichsversuch V1) wurden aus den in der Tabelle 1 aufgeführten Bestandteilen durch Vermischen hergestellt.

Tabelle 1:

| **Zusammensetzung des erfindungsgemäßen Einkomponentenklarlacks (Beispiel 1) und des herkömmlichen Einkomponentenklarlacks (Vergleichsversuch V1)** | | |
|---|---|---|
| **Bestandteile** | **Beispiel 1 (Gew. -Teile)** | **Vergleichsvers. V2 (Gew. -Teile)** |
| Bindemittel | | |
| Polyacrylat (A) gemäß Herstellbeispiel 2 | 34.7 | 50.0 |
| Polyacrylat (A) gemäß Herstellbeispiel 1 (erfindungsgemäß) | 15,3 | -- |
| Thixotropierpaste gemäß Herstellbeispiel 4 | 3.0 | 3.0 |
| Vernetzunigsmittel | | |
| TACT | 26.6 | 26.6 |
| Weitere Bestandteile | | |
| Substit Hydroxyphenylbenztriazol (95%-ig in Xylol) (Tinuvin® 292 der Firma Ciba) | 1.0 | 1.0 |
| Aminoethermodifizierter -2,2,6,6-Tetramethylpiperydinylester(Tinuvin® 400 der Firma Ciba) | 1.2 | 1.2 |
| Handelsübliche Lösung eines polyetherrnodifizierten Polydimethylsiloxans (5 %ig in Xylol) Byk® 310 (Byk Chemie) | 1.4 | 1.4 |
| Butyldiglykolacetat | 5.5 | 5.5 |
| Butylglykolacetat | 5.5 | 5.5 |
| Solvesso® 150 | 5.8 | 5.8 |
| Summe: | 100 | 100 |
| TACT = handelsübliches Tris(alkoxycarbonylamino)triazin von der Firma CYTEC | | |

Der erfindungsgemäße Klarlack des Beispiels 1 wies im DIN4-Becher bei 21 °C eine Auslaufzeit von 23 s auf. Erfindungsgemäß wurde er als Klarlack II verwendet

Der nicht erfindungsgemäße Klarlack des Vergleichsversuchs V1 wies im DIN4-Becher bei 21 °C eine Auslaufzeit von 28 s auf.

**Beispiel 2 und Vergleichsversuch V2**

**Die Herstellung einer erfindungsgemäßen Mehrschichtlackierung ML (Beispiel 2) und einer nicht erfindungsgemäßen Mehrschichtlackierung (Vergleichsversuch V2)**

Für die Herstellung der erfindungsgemäßen Mehrschichtlackierung ML des Beispiels 2 und der nicht erfindungsgemäßen Mehrschichtlackierung des Vergleichsversuchs V2 wurde zunächst ein Klarlack I (Untergrundklarlack) durch Vermischen der in der Tabelle 2 angegebenen Bestandteile hergestellt

Tabelle 2:

| **Die Zusammensetzung des Klarlacks I** | |
|---|---|
| **Bestandteile** | **Gew.-Teile** |
| Herkömmliches Polyacrylat gemäß Herstellbeispiels 6 | 43.4 |
| Vernetzungsmittel gemäß Herstellbeispiel 5 | 9.0 |
| Handelsübliches Butanolverethertes Melamin-Formaldehyd-Harz (60%-ig in Butanol/Xylol) | 16.0 |
| Setalux® C91756 (handelsübliches Thixotropierungsmittel der Firma Akzo) | 13.5 |
| Substituiertes Hydroxyphenyltriazin (65 %ig in Xylol) (Cyagard® 1164 L) | 0.6 |
| Aminoethermodifizierter -2,2,6,6-Tetramethylpiperydiriylester (Tinuvin® 123 der Firma Ciba) | 0.8 |
| Byk® 390 (Byk Chemie) | 0.05 |
| Byk® 310 (Byk Chemie) | 0.15 |
| Tego® LAG 502 | 0.2 |
| Butanol | 11.4 |
| Solventnaphtha® | 2.5 |
| Xylol | 0.9 |
| Butyldiglykolacetat | 1.5 |
| Summe: | 100 |

Der Klarlack I wies im DIN4-Becher bei 21 °C eine Auslaufzeit von 46 s auf Für die Applikation wurde er mit 8 Gewichtsteilen eines Verdünners (organisches Lösemittelgemisch) auf eine Auslaufzeit von 28 s eingestellt.

Zur Herstellung der Prüftafeln wurden nacheinander ein Elektrotauchlack (Trockenschichtdicke 22 µm) und ein Wasserfüller (FU63-9400 der Firma BASF Coatings AG) appliziert und eingebrannt (Trockenschichtdicke 30 µm). Hierbei wurde der Elektrotauchlack während 20 Minuten bei 170°C und der Füller während 20 Minuten bei 160°C eingebrannt. Anschließend wurde ein blauer Wasserbasislack (Wasser-Percolor-Basislack FW 05-513P der Firma BASF Coatings AG mit einer Schichtdicke von 15 - 18 µm aufgetragen und 10 Minuten bei 80°C abgelüftet.

Anschließend wurde der Klarlack I (vgl. Tabelle 2) naß-in-naß appliziert und während 30 Minuten bei 135 °C eingebrannt, so daß eine Trockenschichtdicke von 35 µm resultierte.

Für das Beispiel 2 wurden die so erhaltenen Prüftafeln ohne Zwischenschliff mit dem erfindungsgemäßen Klarlack II (vgl. Tabelle 1) überschichtet. Die resultierende Klarlackschicht II wurde während 20 Minuten bei 140°C eingebrannt; so daß eine Trockenschichtdicke von 20 µm resultierte.

Für den Vergleichsversuch V2 wurden die Prüftafeln ohne Zwischenschliff mit dem nicht erfindungsgemäßen Klarlack (vgl. Tabelle 1) überschichtet Die resultierende Klarlackschicht II wurde ebenfalls während 20 Minuten bei 140°C eingebrannt, so daß eine Trockenschichtdicke von 20 µm resultierte.

Die Haftung der erfindungsgemäßen Mehrschichtlackierung ML des Beispiels 2 wurde nach 24 Stunden Lagerung bei Raumtemperatur nach dem Gitterschnittest nach DIN 53151 (2 mm) [Note 0 bis 5] ermittelt. Es erfolgte keine Enthaftung: Note GT0. Demgegenüber kann es bei der nicht erfindungsgemäßen Mehrschichtlackierung des Vergleichsversuchs V2 zur Enthaftung der Klarlackierung: Note GT4.

Die Kratzfestigkeit der Mehrschichtlackierung auf den Prüftafeln wurde nach 24 Stunden Lagerung bei Raumtemperatur mit Hilfe des in Fig. 2 auf Seite 28 des Artikels von P. Betz und A Bartelt, Progress in Organic Coatings, 22 (1993), Seiten 27 - 37, beschriebenen BASF-Bürstentests, der allerdings bezüglich des verwendeten Gewichts

(2000 g statt der dort genannten 280 g) abgewandelt wurde, folgendermaßen beurteilt:

Bei dem Test wurde die Lackoberfläche mit einem Siebgewebe, welches mit einer Masse belastet wurde, geschädigt. Das Siebgewebe und die Lackoberfläche wurden mit einer Waschmittel-Lösung reichlich benetzt Die Prüftafel wurde mittels eines Motorantriebs in Hubbewegungen unter dem Siebgewebe vor- und zurückgeschoben.

Der Prüfkörper war ein mit Nylon-Siebgewebe (Nr. 11, 31 µm Maschenweite, Tg 50 °C) bespanntes Radiergummi (4,5 x 2,0 cm, breite Seite senkrecht zur Kratzrichtung). Das Auflagegewicht betrugt 2000 g.

Vor jeder Prüfung wurde das Siebgewebe emeuert; dabei war die Laufrichtung der Gewebemaschen parallel zur Kratzrichtung. Mit einer Pipette wurde ca. 1 ml einer frisch aufgerührten 0,25%igen Persil-Lösung vor dem Radiergummi aufgebracht. Die Umdrehungszahl des Motors wurde so eingestellt, daß in einer Zeit von 80 s 80 Doppelhübe ausgeführt wurden. Nach der Prüfung wurde die verbleibende Waschflüssigkeit mit kaltem Leitungswasser abgespült, und die Prüftafel wurden mit Druckluft trockengeblasen. Gemessen wurde der Glanz nach DIN 67530 vor und nach Beschädigung und nach Regenerierung (Reflow). Die Meßrichtung lag hierbei senkrecht zur Kratzrichtung. Die hierbei erhaltenen Ergebnisse werden in der Tabelle 3 einander gegenübergestellt. Sie belegen die überlegene Kratzfestigkeit und das vorzügliche Reflow-Verhalten der erfindungsgemäßen Mehrschichtlackierung ML.

Tabelle 3:

| **Die Kratzfestigkeit nach dem Bürstentest und das Reflow- Verhalten** | | |
|---|---|---|
| **Eigenschaften** | **Beispiel 2** | **Vergleichsversuch V2** |
| Ausgangsglanz: | 87.5 | 88.2 |
| Glanz nach Belastung bei Raumtemperatur: | 79.2 | 73.3 |
| Glanz nach zweistündiger Lagerung bei 40 °C: | 83.5 | 76.4 |
| Glanz nach zweistündiger Lagerung bei 60 °C: | 83.8 | 78.3 |
| Reflow 40°C: | 51.81 | 20.81 |
| Reflow 60 °C: | 55.42 | 33.56 |

Die Haftungseigenschaften der erfindungsgemäßen Mehrschichtlackierung ML des Beispiels 2 und der nicht erfindungsgemäßen Mehrschichtlackierung des Vergleichsversuchs V2 wurde mit Hilfe des Gitterschnittests nach Belastung mit Kondenswasser ermittelt. Die Ergebnisse finden sich in der Tabelle 4. Sie untermauern erneut die überlegene Haftfestigkeit der erfindungsgemäßen Mehrschichtlackierung ML.

Tabelle 4:

| **Kondenswasser-Konstantklimatest (KK-Test)[a]) und Haftungseigenschaften der erfindungsgemäßen Mehrschichtlackierung ML des Beispiels 2 und der Mehrschichlackierung des Vergleichsversuchs 2** | | |
|---|---|---|
| | **Beispiel 2** | **Vergleichsvers.2** |
| Haftung nach dem Gitterschnittest[b)] | GT1 | GT5 |

| | |
|---|---|
| a) | übliches Verfahren. zur Bewertung der Beständigkeit von Lackmaterialien gegenüber einer Belastung mit Dauerfeuchte (240 Stunden, 100% rel. Feuchte, 40°C, Details in der von der BASF Coatings AG erhältlichen Prüfvorschrift MKK0001 A, Ausgabe A/14.05.1996). Die Auswertung erfolgt eine Stunde nach Abschluß der Schwitzwasserbelastung. |
| b) | Gitterschnitt nach DIN 53151 (2 mm) nach 240 Stunden SKK und 24 Stunden Regeneration; Note 0 bis 5: 0 = bester Wert; 5 = schlechtester Wert |

**Beispiel 3 und Vergleichsversuch V3**

**Die Herstellung einer erfindungsgemäßen Mehrschichtlackierung ML (Beispiel 3) und einer nicht erfindungsgemäßen Mehrschichtlackierung (Vergleichsversuch V3)**

Für die Ermittlung der Oberflächeneigenschaften wurde ein handelsüblicher schwarzer Wasserbasislack (FV95-9108 von BASF Coatings AG) auf vertikale Stahlbleche appliziert und während zehn Minuten bei 80 °C abgelüftet. Der Wasserbasislack wurde in einer Naßschichtdicke appliziert, . daß die Trockenschichtdicke nach dem Einbrennen bei 12 bis 15 µm lag.

Anschließend wurde der Klarlack I (vgl. Tabelle 2) naß-in-naß appliziert und während 30 Minuten bei 135 °C eingebrannt, so daß eine Trockenschichtdicke von 35 µm resultierte.

Für das Beispiel 3 wurden die so erhaltenen Prüftafeln ohne Zwischenschliff in vertikaler Stellung mit dem erfindungsgemäßen Klarlack II des Beispiels 1 (vgl. Tabelle 1) überschichtet. Die resultierende erfindungsgemäße Klarlackschicht II wurde während 20 Minuten bei 140°C eingebrannt, so daß eine Trockenschichtdicke von 20 µm resultierte.

Für den Vergleichsversuch V3 wurden die Prüftafeln ohne Zwischenschliff in vertikaler Stellung mit dem nicht erfindungsgemäßen Klarlack des Vergleichsversuchs V1 (vgl. Tabelle 1) überschichtet. Die resultierende erfindungsgemäße Klarlackschicht II wurde ebenfalls während 20 Minuten bei 140°C eingebrannt, so daß eine Trockenschichtdicke von 20 µm resultierte.

Die Oberflächeneigenschaften der resultierenden erfindungsgemäßen Mehrschichtlackierung ML des Beispiels 3 und der nicht erfindungsgemäßen Mehrschichtlackierung des Vergleichsversuchs V3 wurden visuell und mit Hilfe der WaveScan-Methode beurteilt. Die Ergebnisse finden sich in der Tabelle 5. Sie belegen, daß die erfindungsgemäße Mehrschichtlackierung ML eine hervorragende Oberfläche aufweist, welche im wesentlichen frei von groben und feinen Strukturen ist.

Tabelle 5:

| **Verlaufseigenschaften (vertikal) der erfindungsgemäßen Mehrschichtlackierung ML des Beispiels 3 und der Mehrschichtlackierung des Vergleichsversuchs V3** | | |
|---|---|---|
| | **Beispiel 3** | **Vergleichsvers. 3** |
| Verlauf (visuell) | sehr glatte Oberfläche | Oberfläche sehr unruhig |
| Verlauf (meßtechn.)[a] Wavescan/ longwave | 1.3 | 12.7 |
| Wavescan/shortwave | 1.1 | 8.8 |

a) Meßgerät: Fa. Byk/Gardner - Wave scan plus

## Patentansprüche

1. Thermisch sowie gegebenenfalls mit aktinischer Strahlung härtbarer Beschichtungsstoff, enthaltend

   A) mindestens ein Bindemittel mit mindestens zwei funktionellen Gruppen (a1), welche mit komplementären funktionellen Gruppen (b1) im Vernetzungsmittel (B) thermische Vernetzungsreaktionen eingehen können,und

   B) mindestens ein Vernetzungsmittel mit mindestens zwei funktionellen Gruppen (b1), welche mit den komplementären funktionellen Gruppen (a1) im Bindemittel (A) thermische Vernetzungsreaktionen eingehen können,
   sowie gegebenenfalls enthaltend

   C) mindestens einen Bestandteil, welcher mit aktinischer Strahlung vernetztbar ist,

   D) mindestens einen Photoinitiator,

   E) mindestens einen Initiator der thermischen Vernetzung,

   F) mindestens einen mit aktinischer Strahlung und/oder thermisch härtbaren Reaktivverdünner;

   G) mindestens ein Lackadditiv und/oder

   H) mindestens ein organisches Lösemittel,

   **dadurch gekennzeichnet, daß** mindestens ein Bindemittel (A) mindestens ein olefinisch ungesättigtes Polysiloxanmakromonomer, welches im statistischen Mittel mindestens 3,0 Doppelbindungen pro Molekül aufweist, einpolymerisiert enthält.

2. Der Beschichtungsstoff nach Anspruch 1, **dadurch gekennzeichnet, daß** das Polysiloxanmakromonomer im statistischen Mittel mindestens 4,0, besonders bevorzugt mindestens 5,0 und insbesondere mindestens 5,5 Doppelbindungen pro Molekül aufweist.

3. Der Beschichtungsstoffnach Anspruch 1 oder 2, **dadurch gekennzeichnet, daß** das Polysiloxanmakromonomer im statistischen Mittel bis zu 10,5, vorzugsweise 9,0, besonders bevorzugt 8,5 und insbesondere 8,0 Doppelbindungen pro Molekül aufweist.

4. Der Beschichtungsstoff nach einem der Ansprüche 1 bis 3,**dadurch gekennzeichnet, daß** das Polysiloxanmakromonomer im statistischen Mittel 5,5 bis 6,5, insbesondere 6,0, Doppelbindungen pro Molekül enthält.

5. Der Beschichtungsstoff nach einem der Ansprüche 1 bis 4, **dadurch gekennzeichnet, daß** das Polysiloxanmakromonomer ein zahlenmittleres Molekulargewicht Mn von 500 bis 100.000, bevorzugt von 1.000 bis 50.000, besonders bevorzugt 2.000 bis 30.000 und insbesondere 2.500 bis 20.000 Dalton aufweist.

6. Der Beschichtungsstoff nach einem der Ansprüche 1 bis 4, **dadurch gekennzeichnet, daß** das Polysiloxanmakromonomer dreidimensional vernetzt vorliegt.

7. Der Beschichtungsstoff nach einem der Ansprüche 1 bis 5, **dadurch gekennzeichnet, daß** es sich bei dem Polysiloxanmakromonamer um ein Alkyl-, Cycloalkyl-, Alkyl-Aryl-, Alkyl-Cycloalkyl-, Cycloalkyl-Aryl- oder Arylsiloxanharz handelt.

8. Der Beschichtungsstoff nach Anspruch 6, **dadurch gekennzeichnet, daß** die Alkylreste 1 bis 10, besonders bevorzugt 1 bis 5 und insbesondere 1 bis 3 Kohlenstoffatome, die Cycloalkylreste 3 bis 10, besonders bevorzugt 4 bis 8 und insbesondere 5 bis 7 Kohlenstoffatome und die Arylreste 6 bis 12 und insbesondere 6 bis 10 Kohlenstoffatome enthalten.

9. Der Beschichtungsstoffnach Anspruch 6 oder 7, durch **gekennzeichnet**, daß es sich um ein Alkylsiloxanharz, insbesondere um ein Methylsiloxanharz, handelt.

10. Der Beschichtungsstoff nach einem der Ansprüche 1 bis 8, **dadurch gekennzeichnet, daß** das Polysiloxanmakromonomer als Gruppen mit olefinisch ungesättigten Doppelbindungen Acryl-, Methacryl-, Ethacryl-, Vinyl-, Allyl- und/oder Crotonylgruppen, besonders bevorzugt Acryl-, Methacryl- und Vinylgruppen und insbesondere Acrylgruppen enthält.

11. Der Beschichtungsstoff nach einem der Ansprüche 1 bis 9, **dadurch gekennzeichnet, daß** mindestens eines der Bindemittel (A) bis zu 15 Gew.-%, vorzugsweise bis zum 10 Gew.-%, besonders bevorzugt bis zu 5 Gew.-% und insbesondere bis zu 2 Gew.-%, jeweils bezogen auf das Bindemittel (A), mindestens eines Polysiloxanmakromonomeren gemäß einem der Ansprüche 1 bis 9 einpolymerisiert enthält.

12. Der Beschichtungsstoff nach einem der Ansprüche 1 bis 10, **dadurch gekennzeichnet, daß** mindestens eines der Bindemittel (A) mindestens 0,01 Gew.-%, vorzugsweise mindestens 0,05 Gew.-%, besonders bevorzugt mindestens 0,08 Gew.-% und insbesondere mindestens 0,1 Gew.%, jeweils bezogen auf das Bindemittel (A), mindestens eines Polysiloxanmakromonomeren gemäß einem der Ansprüche 1 bis 9 einpolymerisiert enthält.

13. Mehrschichtige Klarlackierung KL für ein grundiertes oder ungrundiertes Substrat, herstellbar, indem man

(1) mindestens eine Klarlackschicht I aus einem thermisch sowie gegebenenfalls mit aktinischer Strahlung härtbaren Beschichtungsstoff I auf die Oberfläche des Substrats appliziert und

(1.1) partiell oder
(1.2) vollständig

aushärtet und

(2) eine weitere Klarlackschicht II aus einem thermisch sowie gegebenenfalls mit aktinischer Strahlung härtbaren Beschichtungsstoff II auf die Oberfläche der Klarlackschicht(en) I appliziert,

(3) wonach man

(3.1) die Klarlackschichten I und II gemeinsam oder
(3.2) die Klarlackschicht II alleine

thermisch sowie gegebenenfalls mit aktinischer Strahlung aushärtet,

**dadurch gekennzeichnet, daß** der Beschichtungsstoff II und/oder der Beschichtungsstoff I, insbesondere der Beschichtungsstoff II, ein Beschichtungsstoff gemäß einem der Ansprüche 1 bis 11 ist.

**14.** Verfahren zur Herstellung einer mehrschichtigen Klarlackierung KL auf einem grundierten oder ungrundierten Substrat, bei dem man

(1) mindestens eine Klarlackschicht I aus einem thermisch sowie gegebenenfalls mit aktinischer Strahlung härtbaren Beschichtungsstoff I auf die Oberfläche des Substrats appliziert und

(1.1) partiell oder
(1.2) vollständig

aushärtet und

(2) eine weitere Klarlackschicht II aus einem thermisch sowie gegebenenfalls mit aktinischer Strahlung härtbaren Beschichtungsstoff II auf die Oberfläche der Klarlackschicht(en) I appliziert,

(3) wonach man

(3.1 ) die Klarlackschichten I und II gemeinsam oder
(3.2) die Klarlackschicht II alleine

thermisch sowie gegebenenfalls mit aktinischer Strahlung aushärtet,

**dadurch gekennzeichnet, daß** der Beschichtungsstoff II und/oder der Beschichtungsstoff I, insbesondere der Beschichtungsstoff II, ein Beschichtungsstoff gemäß einem der Ansprüche 1 bis 11 ist.

**15.** Farb- und/oder effektgebende Mehrschichtlackierung ML für ein grundiertes oder ungrundiertes Substrat, herstellbar, indem man

(1 ) mindestens eine färb- und/oder effektgebende Basislackschicht III aus einem thermisch sowie gegebenenfalls mit aktinischer Strahlung härtbaren pigmentierten Beschichtungsstoff III auf die Oberfläche des Substrats appliziert und, ohne auszuhärten, trocknet,

(2) mindestens eine Klarlackschicht I aus einem thermisch sowie gegebenenfalls mit aktinischer Strahlung härtbaren Beschichtungsstoff I auf die Oberfläche der Basislackschicht III appliziert und

(2.1) für sich alleine partiell,
(2.2) gemeinsam mit der Basislackschicht III partiell oder
(2.3) gemeinsam mit der Basislackschicht III vollständig

thermisch sowie gegebenenfalls mit aktinischer Strahlung aushärtet und

(3) eine weitere Klarlackschicht II aus einem thermisch sowie gegebenenfalls mit aktinischer Strahlung härtbaren Beschichtungsstoff II auf die Oberfläche der Klarlackschicht(en) I appliziert,

(4) wonach man

(4.1) die Klarlackschichten I und II sowie die Basislackschicht III gemeinsam oder
(4.2) die Klarlackschicht II alleine

thermisch sowie gegebenenfalls mit aktinischer Strahlung aushärtet,
**dadurch gekennzeichnet, daß** der Beschichtungsstoff II und/oder der Beschichtungsstoff I, insbesondere der Beschichtungsstoff II, ein Beschichtungsstoff gemäß einem der Ansprüche 1 bis 11 ist.

**16.** Verfahren zur Herstellung einer farb- und/oder effektgebenden Mehrschichtlackierung ML auf einem grundierten

oder ungrundierten Substrat, bei dem man

(1) mindestens eine farb- und/oder effektgebende Basislackschicht III aus einem thermisch sowie gegebenenfalls mit aktinischer Strahlung härtbaren pigmentierten Beschichtungsstoff III auf die Oberfläche des Substrats appliziert und, ohne auszuhärten, trocknet,

(2) mindestens eine Klarlackschicht I aus einem thermisch sowie gegebenenfalls mit aktinischer Strahlung härtbaren Beschichtungsstoff I auf die Oberfläche der Basislackschicht III appliziert und

(2.1) für sich alleine partiell,
(2.2) gemeinsam mit der Basislackschicht III partiell oder
(2.3) gemeinsam mit der Basislackschicht III vollständig

thermisch sowie gegebenenfalls mit aktinischer Strahlung aushärtet und

(3) eine weitere Klarlackschicht II aus einem thermisch sowie gegebenenfalls mit aktinischer Strahlung härtbaren Beschichtungsstoff II auf die Oberfläche der Klarlackschicht(en) I appliziert,

(4) wonach man

(4.1) die Klarlackschichten I und II sowie die Basislackschicht III gemeinsam oder
(4.2) die Klarlackschicht II alleine

thermisch sowie gegebenenfalls mit aktinischer Strahlung aushärtet,

**dadurch gekennzeichnet, daß** der Beschichtungsstoff II und/oder der Beschichtungsstoff I, insbesondere der Beschichtungsstoff II, ein Beschichtungsstoff gemäß einem der Ansprüche 1 bis 11 ist.

**17.** Verwendung des Beschichtungsstoffs gemäß einem der Ansprüche 1 bis 11, der Klarlackierung KL gemäß Anspruch 12, der gemäß Anspruch 13 hergestellten Klarlackierung KL, der Mehrschichtlackierung ML gemäß Anspruch 14 und der gemäß Anspruch 15 hergestellten Mehrschichtlackierung in der Automobilerst- und -reparaturlackierung, der industriellen Lackierung, inclusive Coil Coating und Container Coating, der Kunststofilackierung und der Möbellackierung.

**18.** Grundierte oder ungrundierte Substrate, enthaltend mindestens eine Klarlackierung KL gemäß Anspruch 12, eine gemäß Anspruch 13 hergestellte Klarlackierung KL, eine Mehrschichtlackierung ML gemäß Anspruch 14 und/oder eine gemäß Anspruch 15 hergestellte Mehrschichtlackierung ML.

## Claims

**1.** Coating material curable thermally and, if desired, with actinic radiation, comprising

A) at least one binder containing at least two functional groups (a1) which are able to undergo thermal crosslinking reactions with complementary functional groups (b1) in the crosslinking agent (B), and

B) at least one crosslinking agent containing at least two functional groups (b1) which are able to undergo thermal crosslinking reactions with the complementary functional groups (a1) in the binder (A),
and also, if desired,

C) at least one constituent which is crosslinkable with actinic radiation,

D) at least one photoinitiator,

E) at least one thermal crosslinking initiator,

F) at least one reactive diluent curable with actinic radiation and/or thermally,

G) at least one coatings additive, and/or

H) at least one organic solvent,

**characterized in that** at least one binder (A) contains in copolymerized form at least one olefinically unsaturated polysiloxane macromonomer containing on average per molecule at least 3.0 double bonds.

2. Coating material according to Claim 1, **characterized in that** the polysiloxane macromonomer contains on average per molecule at least 4.0, with particular preference at least 5.0, and in particular at least 5.5 double bonds.

3. Coating material according to Claim 1 or 2, **characterized in that** the polysiloxane macromonomer contains on average per molecule up to 10.5, preferably 9.0, with particular preference 8.5, and in particular 8.0 double bonds.

4. Coating material according to any of Claims 1 to 3, **characterized in that** the polysiloxane macromonomer contains on average per molecule from 5.5 to 6.5, in particular 6.0, double bonds.

5. Coating material according to any of Claims 1 to 4, **characterized in that** the polysiloxane macromonomer has a number-average molecular weight Mn of from 500 to 100 000, preferably from 1 000 to 50 000, with particular preference from 2 000 to 30 000, and in particular from 2 500 to 20 000 daltons.

6. Coating material according to any of Claims 1 to 4, **characterized in that** the polysiloxane macromonomer is in three-dimensionally crosslinked form.

7. Coating material according to any of Claims 1 to 5, **characterized in that** the polysiloxane macromonomer is an alkyl-, cycloalkyl-, alkyl-aryl-, alkyl-cycloalkyl-, cycloalkyl-aryl- or arylsiloxane resin.

8. Coating material according to Claim 6, **characterized in that** the alkyl radicals contain from 1 to 10, with particular preference from 1 to 5, and in particular from 1 to 3 carbon atoms, the cycloalkyl radicals contain from 3 to 10, with particular preference from 4 to 8, and in particular from 5 to 7 carbon atoms, and the aryl radicals contain from 6 to 12 and, in particular, from 6 to 10 carbon atoms.

9. Coating material according to Claim 6 or 7, **characterized in that** it comprises an alkylsiloxane resin, in particular a methylsiloxane resin.

10. Coating material according to any of Claims 1 to 8, **characterized in that** the polysiloxane macromonomer contains, as groups having olefinically unsaturated double bonds, acrylic, methacrylic, ethacrylic, vinyl, allyl and/or crotonyl groups, with particular preference acrylic, methacrylic and vinyl groups, and especially acrylic groups.

11. Coating material according to any of Claims 1 to 9, **characterized in that** at least one of the binders (A) contains in copolymerized form up to 15% by weight, preferably up to 10% by weight, with particular preference up to 5% by weight, and in particular up to 2%, by weight, based in each case on the binder (A), of at least one polysiloxane macromonomer according to any of Claims 1 to 9.

12. Coating material according to any of Claims 1 to 10, **characterized in that** at least one of the binders (A) contains in copolymerized form at least 0.01% by weight, preferably at least 0.05% by weight, with particular preference at least 0.08% by weight, and in particular at least 0.1% by weight, based in each case on the binder (A), of at least one polysiloxane macromonomer according to any of Claims 1 to 9.

13. Multicoat clearcoat system KL for a primed or unprimed substrate, producible by

(1) applying at least one clearcoat film I of a coating material I curable thermally and, if desired, with actinic radiation to the surface of the substrate and

(1.1) partly or
(1.2) fully

curing it, and

(2) applying a further clearcoat film II of a coating material II curable thermally and, if desired, with actinic radiation to the surface of the clearcoat film(s) I

(3) and then curing

(3.1) the clearcoat films I and II together or
(3.2) the clearcoat.film II alone,

thermally and, if desired, with actinic radiation

**characterized in that** the coating material II and/or the coating material I, especially the coating material II, is a coating material according to any of Claims 1 to 11.

**14.** Process for producing a multicoat clearcoat system KL on a primed or unprimed substrate by

(1) applying at least one clearcoat film I of a coating material I curable thermally and, if desired, with actinic radiation to the surface of the substrate and

(1.1) partly or
(1.2) fully

curing it, and
(2) applying a further clearcoat film II of a coating material II curable thermally and, if desired, with actinic radiation to the surface of the clearcoat film(s) I
(3) and then curing

(3.1) the clearcoat films I and II together or
(3.2) the clearcoat film II alone,

thermally and, if desired, with actinic radiation

**characterized in that** the coating material II and/or the coating material I, especially the coating material II, is a coating material according to any of Claims 1 to 11.

**15.** Multicoat colour and/or effect paint system ML for a primed or unprimed substrate, producible by

(1) applying at least one colour and/or effect basecoat film III of a pigmented coating material III curable thermally and, if desired, with actinic radiation to the surface of the substrate, and drying it without curing,

(2) applying at least one clearcoat film I of a coating material I curable thermally and, if desired, with actinic radiation to the surface of the basecoat film III, and

(2.1) partly curing it alone,
(2.2) partly curing it together with the basecoat film III, or
(2.3) fully curing it together with the basecoat film III,

thermally and, if desired, with actinic radiation, and

(3) applying a further clearcoat film II of a coating material II curable thermally and, if desired, with actinic radiation to the surface of the clearcoat film(s) I,

(4) and then curing

(4.1) the clearcoat films I and II and the basecoat film III together or
(4.2) the clearcoat film II alone,

thermally and, if desired, with actinic radiation,

**characterized in that** the coating material II and/or the coating material I, especially the coating material II, is a coating material according to any of Claims 1 to 11.

**16.** Process for producing a multicoat colour and/or effect paint system ML on a primed or unprimed substrate by

(1) applying at least one colour and/or effect basecoat film III of a pigmented coating material III curable thermally and, if desired, with actinic radiation to the surface of the substrate, and drying it without curing,

(2) applying at least one clearcoat film I of a coating material I curable thermally and, if desired, with actinic radiation to the surface of the basecoat film III, and

(2.1) partly curing it alone,
(2.2) partly curing it together with the basecoat film III, or
(2.3) fully curing it together with the basecoat film III,

thermally and, if desired, with actinic radiation, and

(3) applying a further clearcoat film II of a coating material II curable thermally and, if desired, with actinic radiation to the surface of the clearcoat film(s) I,

(4) and then curing

(4.1) the clearcoat films I and II and the basecoat film III together or
(4.2) the clearcoat film II alone,

thermally and, if desired, with actinic radiation,

**characterized in that** the coating material II and/or the coating material I, especially the coating material II, is a coating material according to any of Claims 1 to 11.

**17.** Use of the coating material according to any of Claims 1 to 11, of the clearcoat system KL according to Claim 12, of the clearcoat system KL produced according to Claim 13, of the multicoat paint system ML according to Claim 14, and of the multicoat paint system produced according to Claim 15 in automotive OEM finishing and automotive refinish, industrial coating, including coil coating and container coating, the coating of plastics, and furniture coating.

**18.** Primed or unprimed substrates comprising at least one clearcoat system KL according to Claim 12, one clearcoat system KL produced according to Claim 13, one multicoat paint system ML according to Claim 14 and/or one multicoat paint system ML produced according to Claim 15.

## Revendications

**1.** Matière de revêtement durcissable thermiquement ainsi qu'éventuellement par un rayonnement actinique, contenant

A) au moins un liant comportant au moins deux groupes fonctionnels (a1) qui peuvent entrer dans des réactions, de réticulation thermique avec des groupes fonctionnels (b1) complémentaires dans l'agent de réticulation (B), et

B) au moins un agent de réticulation comportant au moins deux groupes fonctionnels (b1) qui peuvent entrer dans des réactions de réticulation thermique avec les groupes fonctionnels (a1) complémentaires dans le liant (A),
et éventuellement contenant

C) au moins un composant qui est réticulable par un rayonnement actinique,

D) au moins un photo-amorceur,

E) au moins un amorceur de la réticulation thermique,

F) au moins un diluant réactif durcissable thermiquement et/ou par un rayonnement actinique,

G) au moins un additif pour peintures et/ou

H) au moins un solvant organique,

**caractérisée en ce qu'**au moins un liant (A) contient copolymérisé au moins un macromonomère polysiloxane à insaturation oléfinique, qui comporte en moyenne statistique au moins 3,0 doubles liaisons par molécule.

2. Matière de revêtement selon la revendication 1, **caractérisée en ce que** le macromonomère polysiloxane comporte en moyenne statistique au moins 4,0, de façon particulièrement préférée au moins 5,0 et en particulier au moins 5,5 doubles liaisons par molécule.

3. Matière de revêtement selon la revendication 1 ou 2, **caractérisée en ce que** le macromonomère polysiloxane comporte en moyenne statistique jusqu'à 10,5, de préférence 9,0, de façon particulièrement préférée 8,5 et en particulier 8,0 doubles liaisons par molécule.

4. Matière de revêtement selon l'une quelconque des revendications 1 à 3, **caractérisée en ce que** le macromonomère polysiloxane comporte en moyenne statistique 5,5 à 6,5, en particulier 6,0 doubles liaisons par molécule.

5. Matière de revêtement selon l'une quelconque des revendications 1 à 4, **caractérisée en ce que** le macromonomère polysiloxane présente une masse moléculaire moyenne en nombre Mn de 500 à 100 000, de préférence de 1 000 à 50 000, de façon particulièrement préférée de 2 000 à 30 000 et en particulier de 2 500 à 20 000 daltons.

6. Matière de revêtement selon l'une quelconque des revendications 1 à 4, **caractérisée en ce que** le macromonomère polysiloxane présente une réticulation tridimensionnelle.

7. Matière de revêtement selon l'une quelconque des revendications 1 à 5, **caractérisée en ce que** le macromonomère polysiloxane consiste en une résine alkyl-, cycloalkyl-, alkyl-aryl-, alkyl-cycloalkyl-, cycloalkyl-aryl- ou arylsiloxane.

8. Matière de revêtement selon la revendication 6, **caractérisée en ce que** les radicaux alkyle comportent de 1 à 10, de façon particulièrement préférée de 1 à 5 et en particulier de 1 à 3 atomes de carbone, les radicaux cycloalkyle comportent de 3 à 10, de façon particulièrement préférée de 4 à 8 et en particulier de 5 à 7 atomes de carbone et les radicaux aryle comportent de 6 à 12 et en particulier de 6 à 10 atomes de carbone.

9. Matière de revêtement selon la revendication 6 ou 7, **caractérisée en ce qu'**il s'agit d'une résine alkylsiloxane, en particulier d'une résine méthylsiloxane.

10. Matière de revêtement selon l'une quelconque des revendications 1 à 8, **caractérisée en ce que** le macromonomère polysiloxane contient en tant que groupes comportant des doubles liaisons à insaturation oléfinique des groupes acryloyle, méthacryloyle, éthacryloyle, vinyle, allyle et/ou crotonyle, de façon particulièrement préférée des groupes acryloyle, méthacryloyle et vinyle et particulièrement des groupes acryloyle.

11. Matière de revêtement selon l'une quelconque des revendications 1 à 9, **caractérisée en ce qu'**au moins l'un des liants (A) contient copolymérisés jusqu'à 15 % en poids, de préférence jusqu'à 10 % en poids, de façon particulièrement préférée jusqu'à 5 % en poids et en particulier jusqu'à 2 % en poids; chaque fois par rapport au liant (A) d'un macromonomère polysiloxane selon l'une quelconque des revendications 1 à 9.

12. Matière de revêtement selon l'une quelconque des revendications 1 à 10, **caractérisée en ce qu'**au moins l'un des liants (A) contient copolymérisés au moins 0,01 % en poids, de préférence au moins 0,05 % en poids, de façon particulièrement préférée au moins 0,08 % en poids et en particulier au moins 0,1 % en poids, chaque fois par rapport au liant (A), d'au moins un macromonomère polysiloxane selon l'une quelconque des revendications 1 à 9.

13. Revêtement de vernis multicouche KL pour un subjectile muni ou non d'un primaire, pouvant être obtenu par

(1) application sur la surface du subjectile d'au moins une couche de vernis I à partir d'une matière de revêtement I durcissable thermiquement ainsi qu'éventuellement par un rayonnement actinique, et

(1.1) durcissement partiel ou
(1.2) durcissement complet de cette couche

et

(2) application sur la surface de la(des) couche(s) de vernis I d'une autre couche de vernis II à partir d'une matière de revêtement (II) durcissable thermiquement ainsi qu'éventuellement par un rayonnement actinique,

(3) et ensuite complet durcissement thermique ainsi qu'éventuellement par un rayonnement actinique

(3.1) des couches de vernis I et II ensemble ou
(3.2) de la couche de vernis II seule,

**caractérisé en ce que** la matière de revêtement II et/ou la matière de revêtement I, en particulier la matière de revêtement II, consiste(nt) en une matière de revêtement selon l'une quelconque des revendications 1 à 11.

**14.** Procédé pour la production d'un revêtement de vernis multicouche KL sur un subjectile muni ou non d'un primaire, dans lequel

(1) on applique sur la surface du subjectile une couche de vernis I à partir d'une matière de revêtement I durcissable thermiquement ainsi qu'éventuellement par un rayonnement actinique, et on la fait durcir

(1.1) partiellement ou
(1.2) totalement

et

(2) on applique sur la surface de la(des) couche(s) de vernis I une autre couche de vernis II à partir d'une matière de revêtement II durcissable thermiquement ainsi qu'éventuellement par un rayonnement actinique,

(3) à la suite de quoi on fait complètement durcir thermiquement ainsi qu'éventuellement par un rayonnement actinique

(3.1) les couches de vernis I et II ensemble ou
(3.2) la couche de vernis II seule,

**caractérisé en ce que** la matière de revêtement II et/ou la matière de revêtement I, en particulier la matière de revêtement II, consiste(nt) en une matière de revêtement selon l'une quelconque des revendications 1 à 11.

**15.** Revêtement de peinture multicouche colorant et/ou à effet ML pour un subjectile muni ou non d'un primaire, pouvant être obtenu par

(1) application sur la surface du subjectile d'au moins une couche de peinture de fond colorante et/ou à effet III à partir d'une matière de revêtement III pigmentée, durcissable thermiquement ainsi qu'éventuellement par un rayonnement actinique et, sans durcissement complet, séchage de celle-ci,

(2) application sur la surface de la couche de peinture de fond III d'au moins une couche de vernis I à partir d'une matière de revêtement durcissable thermiquement ainsi qu'éventuellement par un rayonnement actinique et durcissement thermique ainsi qu'éventuellement par un rayonnement actinique de celle-ci

(2.1) partiellement, seule,
(2.2) partiellement, conjointement avec la couche de peinture de fond III ou
(2.3) complètement, conjointement avec la couche de peinture de fond III

et

(3) application sur la surface de la(des) couche(s) de vernis I d'une autre couche de vernis II à partir d'une matière de revêtement II durcissable thermiquement ainsi qu'éventuellement par un rayonnement actinique,

(4) et ensuite complet durcissement thermique ainsi qu'éventuellement par un rayonnement actinique

(4.1) des couches de vernis I et II ainsi que de la couche de peinture de fond III ensemble ou
(4.2) de la couche de vernis II seule,

**caractérisé en ce que** la matière de revêtement II et/ou la matière de revêtement I, en particulier la matière de revêtement II, consiste(nt) en une matière de revêtement selon l'une quelconque des revendications 1 à 11.

**16.** Procédé pour la production d'un revêtement de peinture multicouche colorant et/ou à effet ML sur un subjectile muni ou non d'un primaire, pouvant être obtenu par

(1) application sur la surface du subjectile d'au moins une couche de peinture de fond colorante et/ou à effet III à partir d'une matière de revêtement III pigmentée, durcissable thermiquement ainsi qu'éventuellement par un rayonnement actinique et, sans durcissement complet, séchage de celle-ci,

(2) application sur la surface de la couche de peinture de fond III d'au moins une couche de vernis I à partir d'une matière de revêtement I durcissable thermiquement ainsi qu'éventuellement par un rayonnement actinique et durcissement thermique ainsi qu'éventuellement par un rayonnement actinique de celle-ci

(2.1) partiellement, seule,
(2.2) partiellement, conjointement avec la couche de peinture de fond III ou
(2.3) complètement, conjointement avec la couche de peinture de fond III

et

(3) application sur la surface de la(des) couche(s) de vernis I d'une autre couche de vernis II à partir d'une matière de revêtement II durcissable thermiquement ainsi qu'éventuellement par un rayonnement actinique,

(4) et ensuite complet durcissement thermique ainsi qu'éventuellement par un rayonnement actinique

(4.1) des couches de vernis I et II ainsi que de la couche de peinture de fond III ensemble ou
(4.2) de la couche de vernis II seule,

**caractérisé en ce que** la matière de revêtement II et/ou la matière de revêtement I, en particulier la matière de revêtement II, consiste(nt) en une matière de revêtement selon l'une quelconque des revendications 1 à 11.

**17.** Utilisation de la matière de revêtement selon l'une quelconque des revendications 1 à 11, du revêtement de vernis KL selon la revendication 12, du revêtement de vernis KL produit selon la revendication 13, du revêtement de peinture multicouche ML selon la revendication 14 et du revêtement de peinture multicouche produit selon la revendication 15, dans le premier peinturage et le peinturage de réparation d'automobiles, le peinturage industriel, y compris le peinturage de rubans en continu (*coil coating*) et le peinturage de récipients (*container coating*), le peinturage de matières plastiques et le peinturage de meubles.

**18.** Subjectiles munis ou non d'un primaire, comportant au moins un revêtement de vernis KL selon la revendication 12, un revêtement de vernis KL produit selon la revendication 13, un revêtement de peinture multicouche ML selon la revendication 14 et/ou un revêtement de peinture multicouche ML produit selon la revendication 15.